# EUROPÄISCHE PATENTANMELDUNG

(11) **EP 2 072 531 A1**
(43) Veröffentlichungstag der Anmeldung: **24.06.2009**
(21) Anmeldenummer: 07150385.8
(22) Anmeldetag: 21.12.2007
(51) Int. Cl.: C08B 31/00, C08B 37/00, C04B 24/26, C04B 24/38, C08F 20/28

(54) **Polymere mit Saccharidseitenketten und deren Verwendung als Dispergiermittel**

(71) Anmelder: Sika Technology AG, 6340 Baar (CH)
(72) Erfinder: Schober, Irene, 8008, Zürich (CH); Sahli, Stefan, 8902, Urdorf (CH)

(57) **Zusammenfassung**

Die vorliegende Erfindung betrifft Polymere **P** als Dispergiermittel, insbesondere als Verflüssiger, für hydraulisch abbindende Systeme, sowie hydraulisch abbindende Systeme umfassend das Polymer **P.** Das Polymer **P** umfasst (a) eine Hauptkette enthaltend Kohlenwasserstoffgruppen, (b) mindestens eine Seitenkette umfassend mindestens eine anionische Gruppe, ausgewählt aus der Gruppe bestehend aus Carbonsäure-, Sulfonsäure-, Phosphonsäure- und Phosphorsäuregruppe oder deren Salze; (c) mindestens eine Seitenkette umfassend mindestens ein Di- oder Oligosaccharid, wobei das Di- oder Oligosaccharid über das anomere C-Atom via ein Verbindungsstück, welches mindestens eine Ester- oder Amidgruppe umfasst, an die Hauptkette gebunden ist; und gegebenenfalls (d) mindestens eine weitere Seitengruppe.

## Beschreibung

### Technisches Gebiet

Die vorliegende Erfindung betrifft das Gebiet der Zusatzmittel für hydraulisch abbindende Systeme, insbesondere der Dispergiermittel für Betonzusammensetzungen.

### Stand der Technik

Polymere aus α- β-ungesättigten Carbonsäuren mit Polyalkylenglykol-Seitenketten werden bereits seit längerem in der Betontechnologie als Dispergiermittel, insbesondere als Verflüssiger, wegen ihrer starken Wasserreduktion eingesetzt. Diese Polymere haben eine Kammpolymerstruktur. Es gibt eine Reihe von solchen Kammpolymeren, welche neben Ester- und Carbonsäure-Gruppen auch Amidgruppen aufweisen.
Trotz der Verbesserung bezüglich der Verflüssigung ist es jedoch immer noch eine Herausforderung, sich den verschiedenen Anforderungen der Baustellen weltweit anzupassen. Das ist den verschiedenen Arten von Klimas, Zementen, Aggregaten, Zementersatzfüllstoffen usw. zuzuschreiben, sowie dem breiten Anwendungsgebiet wie Fertig-, Transport-, Spritzbeton, selbstverdichtender Beton oder vor Ort gemischter Beton, wo die Zusätze ab und zu völlig verschiedenen Erfordernissen genügen müssen.
Man ist daher stetig auf der Suche nach neuen Zusatzmitteln, welche als Dispergiermittel, insbesondere als Verflüssiger für hydraulisch abbindende Systeme verwendet werden können.
Erdöl ist heute der wichtigste Rohstoff für die Produktion von Chemikalien, so auch für Polymere aus α- β-ungesättigten Carbonsäuren mit Polyalkylenglykol-Seitenketten. Um die Abhängigkeit der chemischen Industrie von diesem Rohstoff zu verringern und um die Erdölreserven zu schonen, werden seit Jahren Alternativen dazu gesucht. Rohstoffe aus der Natur, die eine erneuerbare Rohstoffquelle sind, bieten sich daher an. Weltweit werden intensive Forschungen betrieben, um diese Rohstoffquellen besser zu nutzen. Saccharide und Polysaccharide, die von der Natur in grossen Mengen produziert werden, eignen sich in modifizierter Form für viele Anwendungen. So werden modifizierte Zellulosen wie beispielsweise Methylzellulose (MC), Hydroxyethylzellulose (HEC), Hydroxypropylzellulose (HPC) oder Methylhydroxyethylzellulose (MHPC) und andere als Verdicker eingesetzt. Modifizierte Stärken finden hauptsächlich Verwendung in der Lebensmittelindustrie als Verdicker, Antiklumpmittel, Stabilisatoren und andere.
Diese Modifikationen betreffen alle die Polysaccharidkette und umfassen keine Saccharidketten als Seitenketten zu Kohlenwasserstoff-Hauptketten.
Polymerisierbare Saccharidmonomere werden zum Beispiel in folgender Literatur beschrieben.
US 3356652 beschreibt acetylierte Zuckermonomere hergestellt aus acetylierten Monosacchariden mit einem Halogenatom am anomeren Kohlenstoff und ungesättigten Carbonsäuren bzw. ungesättigte Hydroxyalkyl-Carbonsäuren. Diese Zuckermonomere können homo- oder copolymerisiert werden und je nach gewünschten Eigenschaften deacetyliert werden.
EP 07755951 beschreibt die Herstellung von Mono- und Oligosacchariden die via das anomere Kohlenstoffatom mittels glykosidischer Etherbindung an Hydroxyalkyl-Methacrylsäureester gebunden sind. Die für die Herstellung der Monomeren nötigen Hydroxyalkyl(meth)acrylsäureester sind allerdings keine gängigen Rohstoffe und teuer. Die daraus hergestellten Copolymere werden für die Anwendung für wasserabsorbierende Harze, Oberflächenbehandlungen oder medizinische Anwendungen beschrieben.
US 3225012 beschreibt die Herstellung von Polymethacrylatpolymeren mit substituierten oder nicht substituierten Hexitol-Resten. Die Monosaccharide werden hier via den am C3-gebundenen Sauerstoff mit der radikalisch polymerisierbaren Monomereinheit verbunden. Diese Reaktion erfordert den Schutz der anderen Hydroxylgruppen im Monosaccharid durch Isopropylidengruppen.
EP 0237132 beschreibt Homo- oder Copolymere von Saccharidmonomeren. Auch hier werden die Zuckereinheiten via den am C3-gebundenen Sauerstoff mit der radikalisch polymerisierbaren Monomereinheit verbunden. Die damit hergestellten Copolymere wirken als Verdicker.
Saccharide finden auch Verwendung in der Bauindustrie, so werden modifizierte Zellulosen als Verdicker oder Mittel zur Verbesserung der Wasserrückhaltung wie beispielsweise in US 4466837, DE3910730 beschrieben, eingesetzt. Niedrigmolekulare Abbauprodukte der Stärke wie Maltodextrine oder Nebenprodukte der Zuckerherstellung wie Melasse werden als schwache Verflüssiger aber hauptsächlich als Verzögerer für zementöse Systeme eingesetzt. Allen Anwendungen von diesen Poly- oder Oligosacchariden in zementösen Systemen ist gemeinsam, dass sie das Abbinden verzögern.

Die gängigen Verflüssiger für hydraulische Bindemittel wie Zement oder Gips sind Lignosulfonate, Naphthalinsulfonsäure-Formaldehyd Kondensate, sulfonierte Melamin-Formaldehyd Kondensate sowie Polycarboxylate. Unter Polycarboxylaten werden Polymere verstanden, die Kammpolymere sind, mit Carboxylatgruppen an der Hauptkette und Polyalkylenglykol, meist Polyethylenglykol, Seitenketten. Diese Polymeren sind unter anderem in EP 0 056 627 A2, WO 00/77058A1 oder EP 1 138 697 A1 beschrieben.
Alle diese Verflüssiger ausser den Lignosulfonaten basieren auf Rohstoffen, die aus Erdöl gewonnen werden.

Es besteht daher das Bedürfnis, neue Polymere herzustellen, welche, mindestens teilweise, aus erneuerbaren Rohstoffen bestehen. Ein weiteres Ziel dieser Erfindung ist es, neue Dispergiermittel, speziell neue Verflüssiger für hydraulisch abbindende Stoffe zur Verfügung zu stellen.

### Darstellung der Erfindung

Aufgabe der vorliegenden Erfindung ist es daher, Polymere zur Verfügung zu stellen, welche mindestens teilweise aus erneuerbaren Rohstoffen bestehen, und welche geeignet sind, eine ausreichende Verflüssigungswirkung von hydraulisch abbindenden Zusammensetzungen, insbesondere von Beton und Gips, zu erzielen, ohne zu stark zu verzögern.
Überraschenderweise wurde gefunden, dass dies durch ein Polymer **P** gemäss Anspruch 1 erreicht werden kann. Es konnte nun festgestellt werden, dass ein Polymer **P** umfassend (a) eine Hauptkette enthaltend Kohlenwasserstoffgruppen, (b) mindestens eine Seitenkette umfassend mindestens eine anionische Gruppe, ausgewählt aus der Gruppe bestehend aus Carbonsäure-, Sulfonsäure-, Phosphonsäure- und Phosphorsäuregruppe oder einem Salz davon; (c) mindestens eine Seitenkette umfassend mindestens ein Di- oder Oligosaccharid, wobei das Di- oder Oligosaccharid über das anomere C-Atom via ein Verbindungsstück, welches mindestens eine Ester- oder Amidgruppe umfasst, an die Hauptkette gebunden ist; und gegebenenfalls (d) mindestens eine weitere Seitengruppe, geeignet ist, um verschiedene Feststoffe, speziell hydraulisch abbindende Zusammensetzungen, zu dispergieren, beziehungsweise zu verflüssigen, ohne dass es in grosser Menge eingesetzt werden muss. Dies ermöglicht sowohl eine ökonomische wie auch ökologische Anwendung des erfindungsgemässen Polymers.
Die Erfindung umfasst zudem die Verwendung der erfindungsgemässen Polymere **P** als Verflüssiger für hydraulisch abbindende Zusammensetzungen sowie als Dispergiermittel für wässrige Dispersionen. Zudem umfasst die Erfindung ein Bindemittel enthaltendes Gemisch umfassend mindestens ein Bindemittel und mindestens ein Polymer **P**, sowie die Herstellung solcher Bindemittel enthaltenden Gemische. Weitere vorteilhafte Ausgestaltungen der Erfindung ergeben sich aus den Unteransprüchen.

### Wege zur Ausführung der Erfindung

Die vorliegende Erfindung betrifft ein Polymer **P** umfassend (a) eine Hauptkette enthaltend Kohlenwasserstoffgruppen, (b) mindestens eine Seitenkette umfassend mindestens eine anionische Gruppe, ausgewählt aus der Gruppe bestehend aus Carbonsäure-, Sulfonsäure-, Phosphonsäure- und Phosphorsäuregruppe oder einem Salz davon; (c) mindestens eine Seitenkette umfassend mindestens ein Di- oder Oligosaccharid, wobei das Di- oder Oligosaccharid über das anomere C-Atom via ein Verbindungsstück, welches mindestens eine Ester- oder Amidgruppe umfasst, an die Hauptkette gebunden ist; und gegebenenfalls (d) mindestens eine weitere Seitengruppe.

Unter dem Begriff "Hauptkette enthaltend Kohlenwasserstoffgruppen" wird eine Verbindung verstanden, welche Kohlenstoffatome und Wasserstoffatome enthält. Die Kohlenwasserstoffgruppen können gesättigt oder ungesättigt sein, aliphatische, aromatische, Arylaklyl-, Alkylaryl-, lineare oder verzweigte Gruppen enthalten oder daraus bestehen. Diese Hauptkette enthaltend Kohlenwasserstoffgruppen kann beispielsweise durch radikalische Polymerisation hergestellt werden und daher je nach verwendetem Initiatorsystem und gegebenenfalls Molekulargewichtsregler an den Enden oder in der Kette eines oder mehrere Heteroatome wie beispielsweise S, O, N, P enthalten. Die Hauptkette kann aufgebaut sein aus gleichen oder unterschiedlichen Kohlenwasserstoffgruppen oder -einheiten, die abwechselnd, blockartig oder zufällig gereiht sein können. Beispiele für eine Hauptkette enthaltend Kohlenwasserstoffgruppen sind Kohlenwasserstoffketten, wie sie beispielsweise durch Polymerisation von (Meth)acrylsäure oder deren Derivaten oder durch Copolymerisation von Acrylsäure mit Methacrylsäure oder deren Derivaten oder durch Copolymerisation von Maleinsäure bzw. deren Derivaten mit Vinyl- oder Allylverbindungen entstehen, wenn man die Seitenketten, die keine reinen Kohlenwasserstoffgruppen sind, beispielsweise Säure-, Ester-, Ether- oder Amidgruppen, von der Kette entfernt.

Die mindestens eine anionische Gruppe der einen Seitenkette ist ausgewählt aus der Gruppe bestehend aus Carbonsäure-, Sulfonsäure-, Phosphonsäure- und Phosphorsäuregruppe oder deren Salze. Die Carbonsäure-, Sulfonsäure-, Phosphonsäure- und Phosphorsäuregruppe enthält beispielsweise Carbonsäure, Sulfonsäure, Methylsulfonsäure, Arylsulfonsäure, Carbonylamidomethylpropansulfonsäure, Phosphorsäure oder Phosphonsäure oder deren Salze. Vorzugsweise ist oder enthält die anionische Gruppe eine Carbonsäuregruppe oder deren Salz.

Das Di- oder Oligosaccharid, welches über das anomere C-Atom via ein Verbindungsstück an die Hauptkette des Polymers **P** gebunden ist, enthält vorzugsweise Aldoseeinheiten, bevorzugt Aldohexoseeinheiten, insbesondere Einheiten von Glucose, Galactose, Mannose oder Mischungen davon.
Vorzugsweise ist das Di- oder Oligosaccharid abgebaute Stärke, vorzugsweise Dextrin, abgebaute Cellulose, Lactose oder Maltose.
Die Saccharideinheit, welche über das anomere C-Atom an das Verbindungsstück gebunden ist, kann ringförmig oder offenkettig sein. Unter "Saccharideinheit" und "Zuckereinheit" wird im ganzen vorliegenden Text dasselbe verstanden.

Das Verbindungsstück, welches mindestens eine Ester- oder Amidgruppe umfasst und welches die Hauptkette des Polymers **P** mit dem anomere C-Atom der einen Saccharideinheit des Di- oder Oligosaccharids verbindet, ist vorzugsweise ausgewählt aus der Gruppe bestehend aus -COO-, -CO-NH-R-NH-, -COO-R-O-, und -COO-R-NH-, wobei R unabhängig voneinander für einen C₁ - C₆ Alkylenrest oder einen C₁ - C₆ Hydroxyalkylenrest oder für einen Polyoxyalkylenrest steht. Der Polyoxyalkylenrest vorzugsweise enthält oder besteht aus Polyoxyethylengruppen, Polyoxypropylengruppen oder Mischungen von Oxyethylen- und Oxypropylengruppen.

Unter "anomerem C-Atom" versteht man das C-1-Atom einer reduzierenden Saccharideinheit.

Das erfindungsgemässe Polymer **P** umfasst vorzugsweise
a) mindestens eine anionische Säureeinheit **A** der Formel (I); 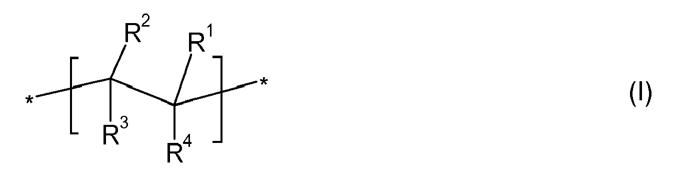
b) mindestens eine Di- oder Oligosaccharideinheit **B** der Formel (II); 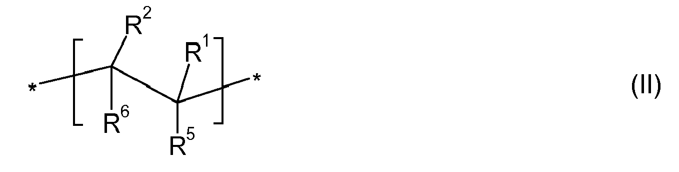 und gegebenenfalls
c) mindestens eine weitere Struktureinheit **C**.

Dabei stehen unabhängig voneinander R¹ für H, CH₂COOM oder eine Alkylgruppe mit 1 bis 5 Kohlenstoffatomen, insbesondere H oder CH₃; R² steht für H, eine Alkylgruppe mit 1 bis 5 Kohlenstoffatomen, COOM oder CH₂COOM, insbesondere H; R³ steht für H, CH₃, COOM oder CH₂COOM, insbesondere H oder COOM; und R⁴ steht unabhängig voneinander für einen Rest der Carbonsäure, Sulfonsäure, Methylsulfonsäure, Arylsulfonsäure, Carbonylamidomethylpropansulfonsäure, Phosphorsäure oder Phosphonsäure oder deren Salze. R⁴ steht insbesondere für COOM; oder R³ kann mit R⁴ einen Ring bilden zu -CO-O-CO-.
M bedeutet H, Alkalimetall, Erdalkalimetall oder andere zwei- oder dreiwertige Metallatome, Ammonium, Alkyl-Ammonium, oder eine Mischung davon. M kann insbesondere ein Kation, insbesondere H⁺, Na⁺, Ca⁺⁺/2, Mg⁺⁺/2, NH₄⁺ oder ein organisches Ammonium darstellen. Es ist dem Fachmann klar, dass bei den mehrwertigen Ionen ein weiteres Gegenion vorhanden sein muss, das unter anderem auch ein Carboxylat desselben oder eines anderen Moleküls des Polymers **P** sein kann. Die Ammoniumverbindungen sind insbesondere Tetraalkylammonium oder aber HR₃N⁺, wobei R eine Alkylgruppe insbesondere eine C₁- bis C₆-Alkylgruppe, bevorzugt Ethyl oder Butyl, darstellt. Ammoniumionen werden insbesondere durch die Neutralisation der Carboxylgruppe mit handelsüblichen tertiären Aminen erhalten.
Vorzugsweise ist die mindestens eine anionische Säureeinheit **A** der Formel (I) teilweise oder vollständig neutralisiert.

Besonders bevorzugt ist ein Polymer **P**, bei dem R¹ H oder CH₃ ist, R⁴ für COOM steht und R², R³ und M für H stehen. Die anionische Säureeinheit **A** der Formel (I) stellt somit vorzugsweise eine Methacrylsäureeinheit oder eine Acrylsäureeinheit oder Salze davon dar. Besonders bevorzugt ist die anionische Säureeinheit **A** der Formel (I) eine Methacrylsäureeinheit.

R⁶ steht unabhängig voneinander für H, CH₃, COOM oder CH₂COOM, vorzugsweise für H.

R⁵ steht unabhängig voneinander für einen Rest der Formel (III)

-(CH₂)ₓ-CO-[R⁷-R⁸]_{y}- R¹¹-(R¹²)_{z} (III)

Dabei steht R⁷ für O oder NH; R⁸ steht für einen C₁ - C₆ Alkylenrest, einen C₁ - C₆ Hydroxyalkylenrest, einen Alkylenpoly(oxyalkylen)rest oder für - R⁹-R¹⁰- steht, wobei R⁹ für einen C₁ - C₆ Alkylenrest, einen C₁ - C₆ Hydroxyalkylenrest oder für einen Alkylenpoly(oxyalkylen)rest steht, wobei R¹⁰ für einen Rest eines offenkettigen via den Estersauerstoff oder NH an R⁹ gebundenen Aldonsäureesters oder -amides steht. Als Aldonsäure kommt beispielsweise Gluconsäure, Galacturonsäure oder Mannuronsäure in Frage. Besonders bevorzugt ist die Gluconsäure. Vorzugsweise steht R¹⁰ für den Rest eines offenkettigen Gluconsäureesters oder -amides.
R¹¹ steht für O.
R¹² steht für einen Rest einer zyklischen Saccharideinheit, wobei ein R¹² über das anomere C-Atom an R¹¹ gebunden ist und wobei R¹² aus gleichen oder unterschiedlichen Saccharideinheiten aufgebaut ist. Bevorzugte Saccharideinheiten sind Glucose-, Galactose- oder Mannoseeinheiten. Besonders bevorzugt steht R¹² für eine Glucoseeinheit. Der Rest R¹² kann teilweise oder vollständig substituiert, beispielsweise acetyliert, methyliert, hydroxyethylert, hydroxypropyliert, carboxymethyliert, sulfoethyliert, vorzugsweise acetyliert, sein.

Die Indizes x und y weisen je unabhängig voneinander den Wert 0 oder 1 auf und z weist unabhängig voneinander den Werte 1 - 100 auf, wobei z ≥ 2 falls y = 0 oder falls y = 1 und R⁸ ≠ -R⁹-R¹⁰-. Somit enthält die mindestens eine Di- oder Oligosaccharideinheit **B** der Formel (II) mindestens zwei Saccharideinheiten, d.h. mindestens zwei Einheiten R¹² oder falls y = 1 und R⁸ = -R⁹-R¹⁰- mindestens eine Saccharideinheit R¹² und mindestens einen Rest eines offenkettigen Aldonsäureesters oder -amides.
Vorzugsweise steht x für 0.

Der Index z steht vorzugsweise für 2 bis 50, vorzugsweise für 2 bis 15, falls y = 0 oder falls y = 1 und R⁸ ≠ -R⁹-R¹⁰-, und für 1 bis 50, vorzugsweise für 1 bis 15, falls y = 1 und R⁸ = -R⁹-R¹⁰-. Der Rest -(R¹²)_{z} kann für Di- oder Oligosaccharideinheiten mit unterschiedlicher Molekulargewichtsverteilung stehen. Das heisst, das Polymer **P** kann verschiedene Reste -(R¹²)_{z} mit gleichem oder unterschiedlichem Rest R¹² enthalten, bei denen z für unterschiedliche Werte steht. Besonders bevorzugt steht jedoch R¹² in jedem Fall für eine Glucoseeinheit.

Falls R⁸ oder R⁹ für einen Alkylenpoly(oxyalkylen)rest steht, steht der Alkylenpoly(oxyalkylen)rest vorzugsweise für -[(R¹³O)ₚ-(R¹⁴O)_{q}-(R¹⁵O)ᵣ]-R¹⁷-, wobei R¹³ , R¹⁴, R¹⁵ und R¹⁷ je unabhängig voneinander eine C₂ - C₄ Alkylengruppe bedeutet mit einer Reihenfolge der (R¹³O)-, (R¹⁴O)-, und (R¹⁵O)-Einheiten in irgendeiner möglichen Sequenz, beispielsweise zufällig, alternierend oder blockweise, und p, q, r weisen unabhängig voneinander je die Werte 0 - 250 auf, wobei p+q+r = 1 - 250. Vorzugsweise steht (R¹³O) ≠ (R¹⁴O) ≠ (R¹⁵O). Vorzugsweise steht R¹³ unabhängig voneinander für eine C₂-Alkylengruppe, R¹⁴ unabhängig voneinander für eine C₃-Alkylengruppe und R¹⁵ unabhängig voneinander für eine C₄-Alkylengruppe. Bevorzugt ist ein Alkylenpoly(oxyalkylen)rest, bei dem R¹³ und R¹⁷ eine C₂-Alkylengruppe darstellen und q = 0 und r = 0 oder bei dem R¹³ eine C₂-Alkylengruppe, R¹⁴ eine C₃-Alkylengruppe und R¹⁷ eine C₂- oder C₃-Alkylengruppe darstellt und r = 0 ist.

In einer bevorzugten Ausführungsform ist y = 1, und R⁸ steht für -R⁹-R¹⁰-, und R⁷ für NH. Dabei steht R⁹ für einen C₁ - C₆ Alkylenrest, vorzugsweise einen C₂ Alkylenrest und R¹⁰ steht für den Rest eines offenkettigen Gluconsäureesters oder -amides, vorzugsweise für den Rest eines offenkettigen Gluconsäureamides. In dieser Ausführungsform steht R⁵ vorzugsweise für einen Rest der Formel (IV), wobei n für 0-99, insbesondere n für 0 bis 50, noch mehr bevorzugt für 0 bis 15 steht. R steht dabei für H oder Acetyl, vorzugsweise für ein H.

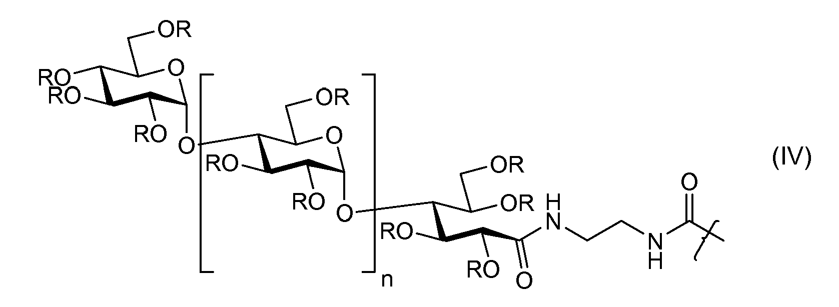

In einer anderen bevorzugten Ausführungsform ist y = 1, und R⁸ steht für einen C₁ - C₆ Alkylenrest, vorzugsweise für einen C₂ Alkylenrest, und R⁷ steht für -O-. In dieser Ausführungsform steht R⁵ vorzugsweise für einen Rest der Formel (V), wobei n für 0-98, insbesondere n für 0 bis 50, noch mehr bevorzugt für 0 bis 15 steht. R steht dabei für H oder Acetyl, vorzugsweise mindestens teilweise Acetyl.

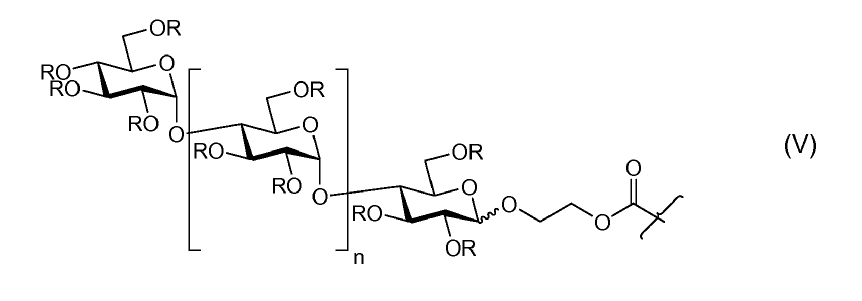

In einer weiteren bevorzugten Ausführungsform ist y = 0 und R⁵ steht vorzugsweise für einen Rest der Formel (VI), wobei n für 0-98, insbesondere n für 0 bis 50, noch mehr bevorzugt für 0 bis 15 steht. R steht dabei für H oder Acetyl, vorzugsweise mindestens teilweise Acetyl

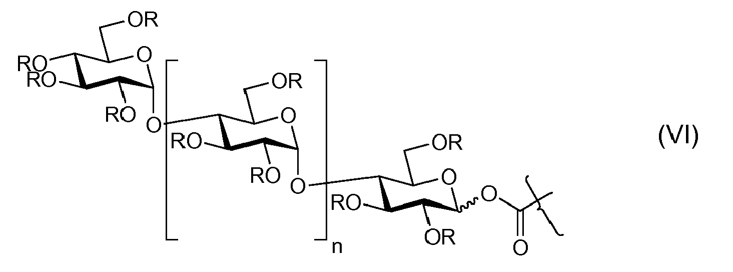

Die einzelnen Saccharideinheiten der Formeln (IV), (V) oder (VI) können untereinander alpha- oder beta-glykosidisch verbunden sein.

Die weitere Struktureinheit **C** kann eine weitere Amid- oder Estereinheit umfassen. Beispielsweise kann die weitere Struktureinheit **C** Carbonsäure-, Sulfonsäure-, Phosphorsäureester-, Phosphonsäure-, Carbonylamidomethylpropansulfonsäure und deren Alkali oder Erdalkalisalze, Poly(oxyalkylen)oxycarbonyl, Poly(oxyalkylen)aminocarbonyl, Poly(oxy-alkylen)oxyalkyl-, Poly(oxyalkylen)oxy-, Hydroxyethyloxycarbonyl-, Acetoxy-, Phenyl- oder N-Pyrrolidonylgruppen umfassen. Vorzugsweise umfasst die weitere Struktureinheit **C** Poly(oxyalkylen)gruppen, vorzugsweise Poly(oxyethylen)gruppen, Poly(oxypropylen)gruppen oder Mischungen davon.
Die Poly(oxyalkylen)gruppen umfassen vorzugsweise Gruppen der Formel -[(R¹³O)ₚ-(R¹⁴O)_{q}-(R¹⁵O)ᵣ]-R¹⁶, wobei R¹³, R¹⁴ und R¹⁵ je unabhängig voneinander eine C₂ - C₄ Alkylengruppe bedeutet mit einer Reihenfolge der (R¹³O)-, (R¹⁴O)-, und (R¹⁵O)-Einheiten in irgendeiner möglichen Sequenz, beispielsweise zufällig, alternierend oder blockweise, und p, q, r weisen unabhängig voneinander je die Werte 0 - 250 auf, wobei p+q+r = 3 - 250. Vorzugsweise steht (R¹³O) ≠ (R¹⁴O) ≠ (R¹⁵O). Vorzugsweise steht R¹³ unabhängig voneinander für eine C₂-Alkylengruppe, R¹⁴ unabhängig voneinander für eine C₃-Alkylengruppe und R¹⁵ unabhängig voneinander für eine C₄-Alkylengruppe. Bevorzugt ist eine Polyoxyalkylengruppe, bei der R¹³ eine C₂-Alkylengruppe darstellt und q = 0 und r = 0 oder bei dem R¹³ eine C₂-Alkylengruppe und R¹⁴ eine C₃-Alkylengruppe darstellt und r = 0 ist. R¹⁶ steht für H oder eine C₁ bis C₁₂ Alkylgruppe, vorzugsweise eine Methylgruppe.

Ein besonders bevorzugtes Polymer **P** umfasst oder besteht aus
a) mindestens einer anionische Säureeinheit **A** der Formel (I'); 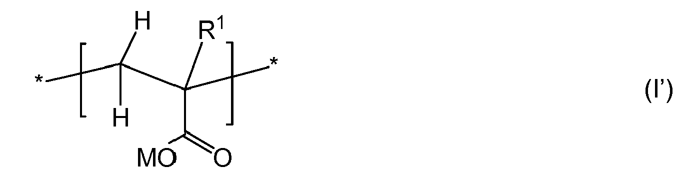
b) mindestens einer Di- oder Oligosaccharideinheit **B** der Formel (II'); 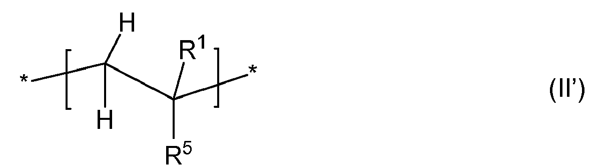 und gegebenenfalls
c) mindestens einer Struktureinheit **C** der Formel (VII); 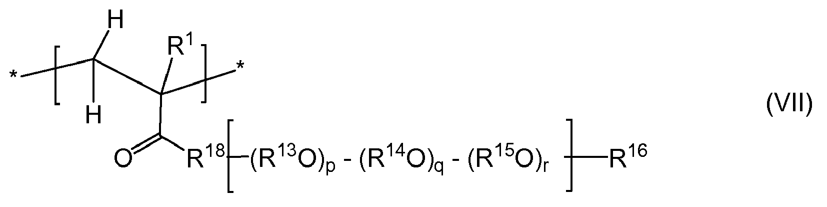
wobei R¹ für H oder einen Methylrest, vorzugsweise einen Methylrest, steht,
wobei M ein H⁺, Na⁺, Ca⁺⁺/2, Mg⁺⁺/2, NH₄⁺ oder ein organisches Ammonium, vorzugsweise ein H⁺ darstellt,
wobei R⁵ unabhängig voneinander für einen Rest der Formel (IV), (V) oder (VI) steht, vorzugsweise für einen Rest der Formel (IV),
wobei R¹³ für eine Ethylengruppe stehen,
wobei R¹⁴ für eine Propylengruppe stehen,
wobei R¹⁵ für eine Butylengruppe stehen,
wobei R¹⁶ für H oder eine C₁ bis C₁₂ Alkylgruppe, vorzugsweise eine Methylgruppe steht,
wobei R¹⁸ für O oder NH, vorzugsweise für O, steht, und
wobei p für 1 - 250, vorzugsweise 10 bis 100 steht, wobei q für 0 - 250, vorzugsweise für 0 bis 50 steht, wobei r für 0 bis 100, vorzugsweise für 0 steht.

Das Polymer **P** kann eine Kombination von verschiedenen Struktureinheiten der jeweiligen Struktureinheiten von **A**, **B**, und gegebenenfalls **C** aufweisen. Beispielsweise können mehrere Struktureinheiten **A** gemischt im Polymer **P** vorkommen, so zum Beispiel ein Gemisch von Methacrylsäureeinheiten mit Acrylsäureeinheiten. Oder es können mehrere Di- oder Oligosaccharideinheit **B** gemischt im Polymer **P** vorkommen, so zum Beispiel mehrere Einheiten mit verschiedenen Substituenten R⁵. Bevorzugt ist beispielsweise die gemeinsame Verwendung von Saccharideinheiten mit unterschiedlichem Molekulargewicht. Es können auch mehrere Ester- oder Amideinheiten **C** im Polymer **P** vorliegen, so zum Beispiel mehrere Estereinheiten **C** mit Polyoxyalkylengruppen. Geeignet ist beispielsweise die gemeinsame Verwendung von Polyoxyethylen mit Polyoxypropylen, oder die gemeinsame Verwendung von Polyoxyalkylenen, insbesondere von Polyoxyethylenen, mit unterschiedlichem Molekulargewicht.

In einer bevorzugten Ausführungsform umfasst das Polymer **P** 10 bis 99.5 Mol-%, vorzugsweise 50 bis 99 Mol-% der Säureeinheit **A** der Formel (I), 0.5 bis 90 Mol-%, vorzugsweise 1 bis 50 Mol-% der Di- oder Oligosaccharideinheit **B** der Formel (II), und gegebenenfalls 0 bis 89.5 Mol-%, vorzugsweise 0.1 bis 50 Mol-% der Struktureinheit **C**, jeweils bezogen auf die Gesamtmolmenge der Struktureinheiten von **A**, **B** und **C** im Polymer **P**.

Besonders bevorzugt umfasst das Polymer **P** 50 bis 98 Mol-% der Säureeinheit **A** der Formel (I), 1 bis 33 Mol-% der Di- oder Oligosaccharideinheit **B** der Formel (II), und gegebenenfalls 0 bis 26 Mol-% der Struktureinheit **C**, jeweils bezogen auf die Gesamtmolmenge der Struktureinheiten von **A**, **B** und **C** im Polymer **P**.

Die Abfolge der einzelnen Struktureinheiten **A**, **B**, und **C** im Polymer **P** kann alternierend, statistisch, blockweise oder zufällig sein.

Das Polymer **P** weist vorzugsweise ein Molekulargewicht M_{w} im Bereich von 1'000 - 150'000 g/mol, vorzugsweise 10'000 - 100'000 g/mol, besonders bevorzugt 15'000-80'000 g/mol, auf und ist vorzugsweise aufgebaut aus 10 bis 500, bevorzugt 20 bis 200, insbesondere 30 bis 100, Struktureinheiten.

Das Polymer **P** kann auf verschiedene Arten hergestellt werden. Es sind im Wesentlichen zwei Verfahren im Einsatz. In einem ersten Verfahren werden die Polymere aus den jeweiligen ungesättigten Säure-, Saccharid-, und gegebenenfalls weiteren copolymerisierbaren Monomeren durch radikalische Polymerisation hergestellt. In einem zweiten Verfahren werden die Polymere in einer sogenannten polymeranalogen Umsetzung aus einem Polymer, welches Carbonsäure-Seitengruppen oder deren Analoga enthält, und den jeweiligen Alkoholen und gegebenenfalls Aminen hergestellt. Das Analogon der Säure, ist beispielsweise ein Säuresalz, Säurehalogenid oder Säureanhydrid.

Besonders bevorzugt ist ein Polymer **P**, welches über die radikalische Copolymerisation in Gegenwart von mindestens einem Radikalbildner und gegebenenfalls mindestens einem Molekulargewichtsregler erhältlich ist. Die Polymerisationsreaktion kann in Lösungsmittel, beispielsweise in Wasser, Toluol, *N,N*-Dimethylformamid (DMF) oder einer Mischung davon, bevorzugt in Wasser, oder in Substanz, erfolgen. Die Umsetzung der Monomere zu einem Polymer **P** erfolgt vorzugsweise bei einer Temperatur von bis 100°C. Es kann ein Schutzgas, beispielsweise Edelgas oder Stickstoff verwendet werden.
Unter "radikalischer Copolymerisation" versteht man eine Polymerisationsreaktion, bei welcher Monomere in Gegenwart eines Radikalbildners polymerisiert werden. Die radikalische Polymerisation ist ein Standardverfahren, welches dem Fachmann bestens bekannt ist. Als Radikalbildner kommen beispielsweise anorganische oder organische Peroxide, wie beispielsweise Wasserstoffperoxid, Dibenzoylperoxid, Hydroperoxide wie Cumolhydroperoxid, Persulfate, wie Natrium, Kalium oder Ammonnium-Persulfat, Perester oder organische Azoverbindungen, wie beispielsweise Azoisobutyronitril, in Frage. Die Polymerisation kann auch durch Redox-Initiatoren ausgelöst werden.
Die Polymerisation erfolgt vorteilhaft unter derartigen Bedingungen, dass das gebildete Polymer aus 10 bis 500, bevorzugt 20 bis 200, insbesondere 30 bis 100, Monomerbausteinen aufgebaut ist. Das Polymer **P** weist vorzugsweise ein Molekulargewicht im Bereich von 1'000 - 150'000 g/mol, vorzugsweise 10'000 - 100'000 g/mol, besonders bevorzugt 15'000-80'000 g/mol, auf.
Unter 'Molekulargewicht' oder 'Molgewicht' versteht man im Sinne der Erfindung das Molekulargewichtsmittel M_{w}.
Zur Regelung der Molekulargewichte können Regler eingesetzt werden, wie beispielsweise anorganische oder organische Schwefelverbindungen, wie beispielsweise Alkali- oder Ammoniumsulfit bzw. - pyrosulfit oder Alkali- oder Ammoniumhydrogensulfit, Mercaptanen, Aldehyde, Ameisensäure oder anorganische Phosphorverbindungen.

Die Erfindung betrifft daher ein Polymer **P**, welches erhältlich ist durch die Polymerisationsreaktion in Gegenwart von mindestens einem Radikalbildner von
(a) mindestens einem ethylenisch ungesättigten Monomer **M**, welches ausgewählt ist aus der Gruppe bestehend aus ungesättigten Mono- oder Dicarbonsäuren, ungesättigten Sulfonsäuren, ungesättigten Phosphorsäuren, ungesättigten Phosphonsäuren oder deren Salze; mit
(b) mindestens einem ethylenisch ungesättigten Zuckermonomer **K** der Formel (VIII); 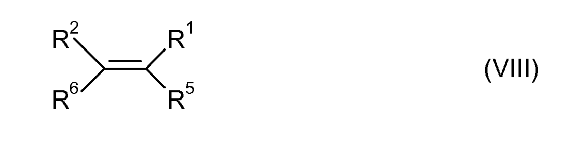 und gegebenenfalls
(c) mindestens einer weiteren ethylenisch ungesättigten Verbindung L.

Die Substituenten R¹, R², R⁵, und R⁶ weisen unabhängig voneinander je dieselben Bedeutungen auf, wie sie bereits für die Formel (II) beschrieben wurden.

Das ethylenisch ungesättigte Monomer **M** ist vorzugsweise eine Mono- oder Dicarbonsäure oder das Salz der ungesättigten Mono- oder Dicarbonsäure. Vorzugsweise ist die Mono- oder Dicarbonsäure Acrylsäure oder Methacrylsäure, Maleinsäure, Itaconsäure, Fumarsäure, Citraconsäure, Glutaconsäure, Mesaconsäure oder Crotonsäure, insbesondere Acrylsäure oder Methacrylsäure. Besonders bevorzugt ist die Methacrylsäure.

Das mindestens eine ethylenisch ungesättigte Zuckermonomer **K** der Formel (VIII) ist vorzugsweise ein Carbonsäureester oder -amid umfassend mindestens eine Di- oder Oligosaccharideinheit, besonders bevorzugt ein Acrylsäureester oder -amid oder ein Methacrylsäureester oder -amid. Beispiele für solche Ester oder Amide sind Di- oder Oligosaccharid-(meth)acrylate oder -(meth)acrylamide, vorzugsweise Dextrin-(meth)acrylate oder Dextrin-(meth)acrylamide, bevorzugt Dextrin-(meth)acrylamide. Es können mehrere Monomere der Formel (VIII) mit verschiedenen Substituenten R⁵ in Kombination miteinander verwendet werden. Bevorzugt ist beispielsweise die gemeinsame Verwendung von Substituenten R⁵ mit unterschiedlichem Molekulargewicht oder die gemeinsame Verwendung von verschiedenen Substituenten R⁵.

Die weitere ethylenisch ungesättigte Verbindung **L** ist vorzugsweise ein Carbonsäureester oder -amid, besonders bevorzugt ein Acrylsäureester- oder amid oder ein Methacrylsäureester oder amid. Beispiele für solche Ester oder Amide sind Polyoxyalkylen(meth)acrylate. Es können mehrere verschiedene Verbindungen **L** in Kombination miteinander verwendet werden. Geeignet ist beispielsweise die gemeinsame Verwendung von verschiedenen Poly(oxyalkylenen), insbesondere von Poly(oxyethylen) mit Poly(oxypropylen), oder die gemeinsame Verwendung von Poly(oxyalkylenen) mit unterschiedlichem Molekulargewicht.

Die Polymere **P** können auch nach der polymeranalogen Reaktion hergestellt werden. Die vorliegende Erfindung betrifft daher auch Polymere **P**, welche durch die polymeranaloge Umsetzung erhältlich sind. Die polymeranaloge Umsetzung ist beispielsweise in EP 1138697A1 sowie EP1348729A1 beschrieben.

Das Polymer **P** findet in unterschiedlichen Bereichen Anwendung, insbesondere in der Beton- und Zementtechnologie oder der Gipstechnologie. Das Polymer **P** verfügt über besonders gute Eigenschaft als Dispergiermittel, insbesondere als Verflüssiger, für hydraulisch abbindende Zusammensetzungen, das heisst, dass die resultierende Mischung ein bedeutend grösseres Fliessverhalten aufweist im Vergleich zu einer Zusammensetzung ohne das Dispergiermittel, ohne dass das Erstarren deutlich verzögert wird. Das Fliessverhalten wird typischerweise über das Ausbreitmass gemessen. Andererseits können Mischungen erzielt werden, die bei gleichem Fliessverhalten bedeutend weniger Wasser benötigen, so dass die mechanischen Eigenschaften der ausgehärteten hydraulisch abgebundenen Zusammensetzung stark erhöht sind.

Insbesondere ist das Polymer **P** geeignet zur Verwendung als Verflüssiger für hydraulisch abbindende Zusammensetzungen, insbesondere für Beton, Mörtel oder Gips. Ebenfalls geeignet ist das Polymer **P** als Dispergiermittel für wässrige Dispersionen.

Als hydraulisch abbindende Systeme oder Zusammensetzungen können grundsätzlich alle dem Beton-Fachmann bekannten hydraulisch abbindenden Substanzen verwendet werden. Insbesondere handelt es sich hier um hydraulische Bindemittel wie Zemente, wie beispielsweise Portlandzemente oder Tonerdeschmelzzemente und respektive deren Mischungen mit Flugaschen, Silica fume, Schlacke, Hüttensande und Kalksteinfiller. Weitere hydraulisch abbindende Substanzen im Sinne der vorliegenden Erfindung sind Gips, in Form von Anhydrit oder Halbhydrat, oder gebrannter Kalk. Als hydraulisch abbindende Zusammensetzung wird Zement bevorzugt. Weiterhin sind Zuschlagstoffe wie Sand, Kies, Steine, Quarzmehl, Kreiden sowie als Additive übliche Bestandteile wie andere Betonverfüssiger, beispielsweise Lignosulfonate, sulfonierte Naphthalin-Formaldehyd Kondensate, sulfonierte Melamin-Formaldehyd-Kondensate oder Polycarboxylatether, Beschleuniger, Korrosionsinhibitoren, Verzögerer, Schwindreduzierer, Entschäumer oder Porenbildner möglich.

Das Polymer **P** kann sowohl in flüssiger als auch in fester Form vorliegen und kann sowohl allein oder als Bestandteil eines Zusatzmittels, insbesondere eines Dispergiermittels oder Verflüssigers verwendet werden. Die Erfindung betrifft daher zusätzlich ein Zusatzmittel in flüssiger oder fester Form umfassend mindestens ein erfindungsgemässes Polymer **P**.
Das Zusatzmittel kann ein einzelnes Polymer **P** oder eine Mischung mehrerer verschiedener Polymere **P** enthalten. Es können aber auch Polymere **P** mit anderen Dispergiermitteln oder Verflüssigern verwendet werden. Das Zusatzmittel kann auch weitere Bestandteile enthalten. Beispiele für weitere Bestandteile sind Lösungsmittel oder Additive, wie andere Verfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Verzögerer, Schwindreduzierer, Entschäumer, oder Schaumbildner.
Je nach Herstellverfahren oder Reaktionsführung kann der Verflüssiger oder das Dispergiermittel zudem zusätzlich zum Polymer **P** freie Verbindungen der Ausgangsstoffe wie freie Saccharidmonomere oder freie Di- oder Oligosaccharide, insbesondere freie Monohydroxyverbindungen wie beispielsweise Polyalkylenglykol, insbesondere freies Polyethylenglykol, enthalten.

Falls das Polymer **P** in flüssiger Form verwendet wird, wird für die Umsetzung vorzugsweise ein Lösungsmittel eingesetzt. Bevorzugte Lösungsmittel sind beispielsweise Toluol, N,N-Dimethylformamid (DMF), Xylol, Dimethylsulfoxid (DMSO) oder Dioxan sowie Alkohole, insbesondere Ethanol oder Isopropanol, und Wasser, wobei Wasser das am meist bevorzugte Lösungsmittel ist.
Das Polymer **P** kann auch in festem Aggregatszustand vorliegen. Unter Polymere im festen Aggregatszustand versteht man im Sinne der Erfindung Polymere, die bei Raumtemperatur im festen Aggregatzustand vorliegen und beispielsweise Pulver, Schuppen, Pellets, Granulate oder Platten sind und sich in dieser Form problemlos transportieren und lagern lassen. Dabei kann das Polymer **P** bei der Herstellung direkt in den festen Aggregatszustand überführt werden, oder es wird zuerst in flüssiger Form hergestellt und anschliessend beispielsweise in Pulverform überführt, z.B. durch Sprühtrocknung, mit Hilfe von Schutzkolloiden oder anderen Trocknungshilfsmitteln.

In einem weiteren Aspekt betrifft die vorliegende Erfindung ein Bindemittel enthaltendes Gemisch umfassend mindestens ein hydraulisch abbindendes Bindemittel und mindestens ein erfindungsgemässes Polymer **P**. Als Bindemittel kommen beispielsweise Zement, insbesondere Portlandzemente oder Tonerdeschmelzzemente und respektive deren Mischungen mit Flugaschen, Silica fume, Schlacke, Hüttensande und Kalksteinfiller oder gebrannter Kalk, ein latent hydraulisches Pulver, inertes mikroskopisches Pulver oder Gips in Frage. Zum Term "Gips" wird jede bekannte Form von Gips gezählt, insbesondere Calciumsulfat-α-Halbhydrat, Calciumsulfat-β-Halbhydrat oder Calciumsulfat-Anhydrit. Als Bindemittel enthaltende Gemische kommen vorzugsweise Betonzusammensetzungen oder Gipszusammensetzungen in Frage.
Weiterhin kann das Gemisch weitere Zuschlagstoffe wie Sand, Kies, Steine, Quarzmehl, Kreiden sowie als Additive übliche Bestandteile wie andere Verfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Verzögerer, Schwindreduzierer, Entschäumer, oder Schaumbildner enthalten.

Das Polymer **P** wird bevorzugt in einer Menge von 0.01 bis 10 Gew.-% bezogen auf das Gewicht des Bindemittels verwendet, um die gewünschte Wirkung zu erzielen. Es können auch mehrere Polymere **P** gemischt verwendet werden, um die gewünschte Wirkung zu erzielen.

In einem weiteren Aspekt betrifft die vorliegende Erfindung ein Verfahren zur Herstellung eines Bindemittels enthaltenden Gemisches wobei das mindestens eine Polymer **P** getrennt oder als Zusatzmittel vorgemischt in fester oder flüssiger Form dem Bindemittel zugegeben wird.

Besonders geeignet ist die Zugabe des Polymers **P** in fester Form. So kann das Polymer **P** im festen Aggregatszustand ein Bestandteil einer Zementzusammensetzung, einer sogenannten Trockenmischung, sein, die über längere Zeit lagerfähig ist und typischerweise in Säcken abgepackt oder in Silos gelagert wird und zum Einsatz kommt. Eine solche Trockenmischung ist auch nach längerer Lagerungszeit einsetzbar und weist eine gute Rieselfähigkeit auf.
Das Polymer **P** kann auch einer üblichen Betonzusammensetzung oder Gipszusammensetzung mit oder kurz vor oder kurz nach der Zugabe des Wassers beigegeben werden. Als besonders geeignet gezeigt hat sich hierbei die Zugabe des Polymers **P** in Form einer wässrigen Lösung oder Dispersion, insbesondere als Anmachwasser oder als Teil des Anmachwassers. Die Herstellung der wässrigen Lösung oder Dispersion erfolgt durch Zusetzen von Wasser bei der Herstellung des Polymers **P** oder durch nachträgliches Vermengen von Polymer **P** mit Wasser. Typischerweise beträgt dabei der Anteil des Polymeren **P** 10 bis 90 Gewichts-%, insbesondere 20 bis 50 Gew.-%, bezogen auf das Gewicht der wässrigen Lösung oder Dispersion. Je nach Art des Polymers **P** entsteht eine Dispersion oder eine Lösung. Bevorzugt wird eine Lösung.

Das erfindungsgemässe Polymer **P** kann ein Bestandteil einer wässrigen Zusammensetzung sein, welche über längere Zeit lagerstabil ist, oder es kann ein Bestandteil einer hydraulisch abbindenden Zusammensetzung sein. Als Bestandteil einer hydraulisch abbindenden Zusammensetzung kann das Polymer **P** einer üblichen hydraulisch abbindenden Zusammensetzung mit oder kurz vor oder kurz nach der Zugabe des Wassers beigegeben werden. Als besonders geeignet gezeigt hat sich hierbei die Zugabe des Polymers **P** in Form einer wässrigen Lösung oder Dispersion, insbesondere als Anmachwasser oder als Teil des Anmachwassers.

Das Polymer **P** verfügt über besonders gute Eigenschaften als Verflüssiger für hydraulisch abbindende Zusammensetzungen, insbesondere zementöse Zusammensetzungen, das heisst, dass bei in der Zement- und Betontechnologie üblichen Wasser/Zement-Verhältnissen (W/Z) die resultierende Mischung ein bedeutend bessere Fliessfähigkeit aufweist im Vergleich zu einer Zusammensetzung ohne den Verflüssiger. Das Fliessverhalten wird typischerweise über das Ausbreitmass gemessen. Andererseits können Mischungen erzielt werden, die bei gleichem Fliessverhalten bedeutend weniger Wasser benötigen, so dass die mechanischen Eigenschaften der ausgehärteten hydraulisch abbindenden Zusammensetzung stark erhöht sind.

Ein grosser Vorteil des erfindungsgemässen Polymers **P** gegenüber herkömmliche Polymere, welche als Dispergiermittel oder Verflüssiger verwendet werden können, liegt darin, dass das erfindungsgemässe Polymer **P** durch die Di- oder Oligosaccharidgruppen zumindest teilweise aus erneuerbaren Rohstoffen besteht.

### Beispiele

### 1. Herstellvorschrift für erfindungsgemässe Polymere P

### 1.1 Herstellung des Zuckermonomers D10MA

### Schritt 1: Herstellung von Dextrin 10-Aldonolacton

Kommerziell erhältliches (beispielsweise bei Sigma-Aldrich Schweiz) Dextrin10 (19.44 g, 19 mmol) wurde in Wasser gelöst (180 mL) und CaCO₃ (3.00 g, 30 mmol) sowie CaBr₂-Hydrat (1.56 g, 7.16 mmol) zugegeben. Die weisse Suspension wurde bei Raumtemperatur gerührt, und dann über Graphitelektroden 2-3 h Strom durch das Gemisch geleitet (Strom: 0.3-0.4 A; Spannung 16-20 V; insgesamt 0.686 Ah) und mit einem Eisbad gekühlt. Nach Abschaltung des Stroms wurde noch 1 h ohne Kühlung nachgerührt. Das Gemisch wurde über einem Filterpapier filtriert, und das Filtrat mit Amberlite IR120 H⁺ versetzt und 30 min bei Raumtemperatur gerührt. Das Amberlite wurde über einem Filter abgetrennt und das Filtrat zu einer Suspension aus Ag₂CO₃ (3.00 g, 10.9 mmol) in wenig H₂O gegeben und 30 min gerührt, wobei sich eine graue Suspension bildete. Das Gemisch wurde über Nacht stehen gelassen und zentrifugiert. Der Überstand (pH ~ 4.5) wurde dekantiert und über einer Amberlite IR120 H⁺ Säule filtriert und das Filtrat (pH ~ 3) am Rotationsverdampfer eingeengt. Ausbeute: 90-100% weisser Feststoff; Bezeichnung: Dextrin10-Aldonolacton.

### Schritt 2: Herstellung von N-(2-Aminoethyl)-dextrinaldonamid

Dextrin10-Aldonolacton (16.31 g, 16.5 mmol) wurde in Ethylenglykol (165 mL) gelöst, mit Ethylendiamin (4.96 g, 82.5 mmol) versetzt und 16 h bei 80°C gerührt. Nach dem Abkühlen wurde die Lösung auf Aceton (1500 mL) gegeben und das Produkt gefällt. Der Feststoff wurde abfiltriert und in Wasser aufgenommen, die wässrige Lösung schliesslich gefriergetrocknet. Ausbeute: 70%; Bezeichnung: *N*-(2-Aminoethyl)-dextrinaldonamid.

### Schritt 3: Herstellung von N-(2-Methacrylamidoethyl)-dextrin10-aldonamid

*N*-(2-Aminoethyl)-dextrinaldonamid (17.48 g, 16.6 mmol) wurde in trockenem N,N-Dimethylformamid (DMF) (160 mL) gelöst und mit Methacrylsäureanhydrid (2.08 g, 20.0 mmol) und Pyridin (13.17 g, 166.5 mmol) versetzt. Das Gemisch wurde 18 h bei Raumtemperatur gerührt und am Rotationsverdampfer eingeengt. Der Rückstand wurde in Wasser (30 mL) gelöst, in Aceton (600 mL) ausgefällt und das Gemisch filtriert. Es wurde ein beiger Feststoff erhalten. Ausbeute: 76%.
Das so erhaltene Dextrin-Monomer wird als **D10MA** bezeichnet.

### 1.2 Herstellung des Zuckermonomers D5MA und D15MA

Die Zuckermonomeren **D5MA** und **D15MA** wurden analog zu **D10MA**, ausgehend von Dextrin 5 und Dextrin 15 (beispielsweise kommerziell erhältlich bei Sigma-Aldrich Schweiz) hergestellt.

### 1.3 Herstellung eines Polymers P1 von D15MA mit Methacrylsäure mit einem Molverhältnis von 1:3

Zu einer Lösung von **D15MA** (1.71 g, 1.39 mmol) und Methacrylsäure (0.36 g, 4.18 mmol) in Wasser (16 mL) wurden Na₂S₂O₈ (110 mg, 0.45 mmol) und Na₂S₂O₅ 80 mg, 0.45 mmol) zugegeben. Die Mischung wurde 16 h bei 80°C gerührt und nach dem Abkühlen mit 10% wässriger NaOH-Lösung (0.81 mL) teilneutralisiert (pH ∼ 4.5). Das so erhaltene Polymer wird als P1 bezeichnet.

### 1.4 Herstellung eines Polymers P2 von D10MA mit Methacrylsäure mit einem Molverhältnis von 1:3

Polymer P2 wurde analog zu Polymer **P1** hergestellt, aber statt **D15MA** wurde die gleiche molare Menge **D10MA** eingesetzt und Na₂S₂O₈ und Na₂S₂O₅, jeweils in 5 mol% auf das Zuckermonomer **D10MA** eingesetzt. Das so erhaltene Polymer wird als P2 bezeichnet.

### 1.5 Herstellung eines Polymers P3 von D10MA mit MPEG1000MA (Poly(ethylenglykol)methylether-Methacrylat mit Molgewicht von ca. 1000 g/mol) und Methacrylsäure mit einem Molverhältnis von 0.25:1.0:2.8

Zu einer 22% wässrigen Lösung von **D10MA** (0.25 mmol), Methacrylsäure (2.8 mmol) und MPEG1000MA (1.0 mmol) (beispielsweise Bisomer S10W, erhältlich bei Cognis GmbH, Deutschland) wurden eine 10% wässrige Na₂S₂O₈-Lösung (6 mol% auf die Summe der Monomere) sowie eine 10% wässrige Na₂S₂O₅-Lösung (6 mol% auf die Summe der Monomere) in vier Portionen während 2 h unter Rühren bei 80°C zugegeben und weitere 40 min bei 80°C gerührt. Es wurde abgekühlt und ein Drittel der COOH-Gruppen mit 10% wässriger NaOH-Lösung neutralisiert. Das so erhaltene Polymer wird als P3 bezeichnet.

### 1.6 Herstellung eines Vergleichs-Polymers V1 von MPEG1000MA und Methacrylsäure mit einem Molverhältnis von 1:2.8

Die Copolymerisation wurde analog Herstellungsbeispiel 1.5 zur Herstellung des **Polymers P3** durchgeführt, aber ohne Zugabe des Zuckermonomers D10MA und mit einem molaren Verhältnis von MPEG1000MA zu Methacrylsäure von 1:2.8. Das so erhaltene Vergleichs-Polymer wird als **V1** bezeichnet.

### 1.7 Herstellung eines Polymers P4 aus D10MA mit MPEG1000MA und Methacrylsäure mit einem Molverhältnis von 0.05:0.95:3

Herstellung der Zugabelösung I: Eine Monomerlösung wurde hergestellt aus 7.42 g Wasser, dem 1.44 g Methacrylsäure zugegeben wurden. Anschliessend wurde diese mit 2.01 g 10%iger NaOH teil-neutralisiert (30% der COOH Gruppen). Zu dieser Lösung wurden 0.13 g **D10MA** und 5.66 g MPEG1000MA (Bisomer S10W, 49.5% Lösung) zugegeben.
Herstellung der Zugabelösung II: 0.32 g Na-Persulfat (6 mol% bezogen auf die Summe der Monomeren) wurden in 7.0 g Wasser gelöst.

Herstellung der Zugabelösung III: 0.25 g Na-Pyrosulfit (6 mol% bezogen auf die Summe der Monomeren) wurden in 7.0 g Wasser gelöst.

In einem Reaktionskolben wurden 3.0 g Wasser vorgelegt und erwärmt (Badtemperatur 95°C). Nun wurden gleichzeitig Zugabelösungen I, II und III innerhalb von 2 Stunden zudosiert, wobei stark gerührt wurde und die Badtemperatur bei 95°C gehalten wurde. Nach Beendigung der Zudosierung der Lösungen wurde noch 1 Stunde weitergerührt. Nach dem Abkühlen wurde die Polymerlösung via Ultrafiltration (10 kD - Ausschlussgrenze) gereinigt. Es wurde ein Copolymer mit einem mittleren Mw von 43.3 Kilodalton (kDa) und einer Polydispersität von 2.94 erhalten. Das so erhaltene Polymer wird als **P4** bezeichnet.

### 1.8 Herstellung der Polymere P5 bis P23 sowie des Vergleichs-Polymers V2

Analog zu Herstellungsbeispiel 1.7 zur Herstellung des Polymers **P4** wurden die Polymere **P5** bis **P23** sowie das Vergleichs-Polymer V2 hergestellt mit den in Tabelle 1 (nach Beispiel 1.17 angegeben) aufgeführten Monomeren und Molverhältnissen. Dazu wurde als Säuremonomer entweder Acrylsäure (AS) oder Methacrylsäure (MAS) verwendet, als Zuckermonomer wurde D5MA oder D10MA verwendet, und als weiteres Monomer wurde MPEG1000MA (Bisomer S10W) oder Hydroxyethyl-Methacrylat (HEMA, beispielsweise erhältlich bei Sigma-Aldrich Schweiz) verwendet. Die Monomere wurden in Molverhältnissen zueinander angegeben, M_{w} bedeutet Molekulargewicht in Kilodalton (kDa) und Polyd. bedeutet Polydispersität.

### 1.9 Herstellung des acetylierten Zuckermonomers AcLactoseMA; 2,3,6,2',3',4',6'-Hepta-O-acetyl-1-O-methacryloyl-lactose

### Schritt 1: Peracetylierung von Lactose

Die Lactose (beispielsweise erhältlich bei Sigma-Aldrich Schweiz) wurde nach einer bekannten Vorschrift peracetyliert (T. K. Lindhorst, Essentials of Carbohydrate Chemistry and Biochemistry, 2nd ed., Wiley-VCH, Weinheim, 2003).

### Schritt 2: Selektive Deacetylierung an der C1 Position (am anomeren C-Atom) zur 2,3,6,2',3'1,4'. 6'-Hepta-O-acetyl-lactose

Die peracetylierte Lactose wurde nach einer bekannten Vorschrift selektiv an der C1-Position deacetyliert (T. K. Lindhorst, Essentials of Carbohydrate Chemistry and Biochemistry, 2nd ed., Wiley-VCH, Weinheim, 2003).

### Schritt 3: Veresterung der selektiv deacetylierten Lactose mit Methacrylsäureanhydrid zur 2,3,6,2',3',4',6'-Hepta-O-acetyl-1-O-methacryloyl-lactose

Zu einer Lösung aus 2,3,6,2',3',4',6'-Hepta-O-acetyl-lactose (2.35 g, 3.69 mmol), 4-N,N-Dimethylaminopyridin (45 mg, 0.37 mmol) und einer Spatelspitze Hydrochinonmonomethylether in N,N-Dimethylformamid (DMF) (13 mL) wurde unter N₂ Methacrylsäureanhydrid (1.1 mL, 7.38 mmol) langsam zugegeben und 18 h bei Raumtemperatur gerührt. Die Lösung wurde auf H₂O gegeben und mit CH₂Cl₂ extrahiert. Die organische Phase wurde mit 1 N wässriger HCl-Lösung und mit gesättigter wässriger NaHCO₃-Lösung gewaschen, über Na₂SO₄ getrocknet und am Rotationsverdampfer eingeengt. Die Reinigung erfolgte chromatographisch (SiO₂; AcOEt/Heptan Gemische). Farbloser Feststoff. Ausbeute: 73%.
Das so erhaltene Zuchermonomer wird als **AcLactoseMA** bezeichnet und wird durch die Formel (IX) dargestellt, wobei Ac für einen Acetylrest steht.

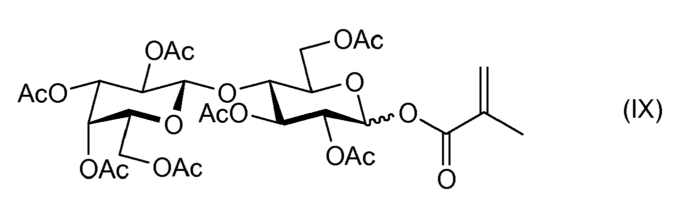

### 1.10 Herstellung des acetylierten Zuckermonomers AcMaltoseMA; 2,3,6,2',3',4',6'-Hepta-O-acetyl-1-O-methacryloyl-maltose

AcMaltoseMA wurde analog Herstellungsbeispiel 1.9 zur Herstellung von **AcLactoseMA** hergestellt, nur wurde statt Lactose, Maltose-monohydrat (erhältlich bei Sigma-Aldrich Schweiz) als Ausgangssubstanz verwendet. Das so erhaltene Zuckermonomer wird als **AcMaltoseMA** bezeichnet und wird durch die Formel (X) dargestellt, wobei Ac für einen Acetylrest steht.

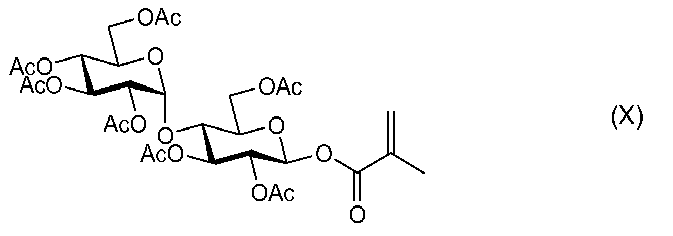

### 1.11 Herstellung des Zuckermonomers AcLactoseHEMA; 2,3,6,2',3',4',6'-Hepta-O-acetyl-1-O-(2-methacryloyloxyethyl)-lactose

*Schritt 1 und 2:* gleich wie in Herstellungsbeispiel 1.9.

*Schritt 3*: 2,3,6,2',3',4',6'-Hepta-O-acetyl-lactose wurde wie in der Literatur beschrieben mit Trichloracetonitril zum entsprechenden Trichloracetimidat umgesetzt (T. K. Lindhorst, Essentials of Carbohydrate Chemistry and Biochemistry, 2nd ed., Wiley-VCH, Weinheim, 2003).

*Schritt 4:* 2,3,6,2',3',4',6'-Hepta-*O*-acetyl-1-*O*-(2,2,2-trichlor-1-iminoethyl)-lactose (1 mmol) wurde unter N₂ mit einer Spatelspitze Hydrochinonmonomethylether in trockenen CH₂Cl₂ (0.1 molar) vorgelegt und Hydroxyethylacrylat (2 mmol) zugegeben und gerührt. Bei 0° wurde BF₃·OEt₂ (5 mmol) langsam zugetropft und die entstandene Lösung wurde über Nacht bei Raumtemperatur gerührt, dann mit AcOEt (5-fache Menge zu CH₂Cl₂) versetzt und mit gesättigter wässriger NaHCO₃-Lösung und gesättigter wässriger NaCl-Lösung gewaschen, über Na₂SO₄ getrocknet und am Rotationsverdampfer eingeengt. Die Reinigung erfolgte chromatographisch (SiO₂; AcOEt/Heptan Gemische). Farbloser Feststoff. Ausbeute: 78%.

Das so erhaltene Zuckermonomer wird als **AcLactoseHEMA** bezeichnet und wird durch die Formel (XI) dargestellt, wobei Ac für einen Acetylrest steht.

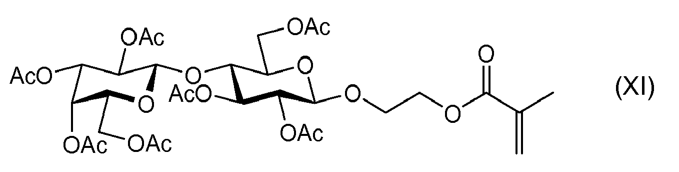

### 1.12 Herstellung des Zuckermonomers AcMaltoseHEMA: 2,3,6,2',3',4',6'-Hepta-O-acetyl-1-O-(2-methacryloyloxyethyl)-Maltose

Analog zur Herstellung von **AcLactoseHEMA** wurde **AcMaltoseHEMA** hergestellt. Als Ausgangstoff wurde anstelle von Lactose Maltose-Monohydrat (erhältlich bei Sigma-Aldrich Schweiz) eingesetzt.
Das so erhaltene Zuckermonomer wird als **AcMaltoseHEMA** bezeichnet und wird durch die Formel (XII) dargestellt, wobei Ac acetyliert bedeutet.

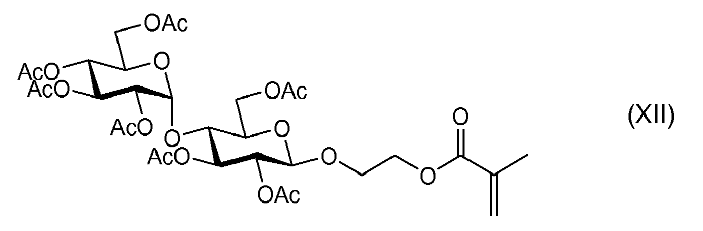

### 1.13 Herstellung des Polymers P24 aus AcLactoseMA und Methacrylsäure mit einem Molverhältnis von 1:2 und anschliessende Deacetylierung

**AcLactoseMA** (1 mmol) wurde unter N₂ in trockenen Toluol (0.2 molar) gelöst und Azoisobutyronitril (AiBN) (0.3 mmol) sowie Methacrylsäure (mmol) zugegeben. Die Lösung wurde 30 min unter N₂ im Ultraschallbad entgast und bei 70°C 16 h gerührt. Die entstandene Lösung wurde eingeengt, der Rückstand in eine EtOH/Aceton 1:1 Mischung aufgenommen und in Eiswasser ausgefällt. Der Niederschlag wurde abfiltriert und im Hochvakuum getrocknet. Das Copolymer wurde anschliessend in Methanol (30-60 mL/g Polymer) gelöst und NaOMe (0.5 molar in MeOH, 150 mol% zu COOH-Gruppen) zugegeben. Das Gemisch wurde 16 h bei Raumtemperatur gerührt,
wobei sich eine beige Suspension bildete. Zugabe von Amberlite IR120 H⁺ (ca. 0.1 g/mL Suspension) gefolgt von 1 h Rühren und Abtrennung des Amberlites führte zu einer klaren Lösung, welche am Rotationsverdampfer eingeengt wurde. Farbloser Feststoff. Ausbeute 90-100%. Das so erhaltene Polymer wird als **P24** bezeichnet.

### 1.14 Herstellung der Polymere P25 bis P27 aus AcMaltoseMA, AcLactoseHEMA bzw. AcMaltoseHEMA und Methacrylsäure mit einem Molverhältnis von 1:2 und anschiessende Deacetylierung

Die Polymere **P25** bis **P27** wurden analog Herstellungsbeispiel 1.13 zur Herstellung des Polymers **P24** hergestellt, aber anstelle von **AcLactoseMA** wurde **AcMaltoseMA** für Polymer **P25**, AcLactoseHEMA für Polymer **P26** oder **AcMaltoseHEMA** für Polymer **P27** eingesetzt.

### 1.15 Herstellung des Polymers P28 aus AcLactoseHEMA, MPEG1000MA und Methacrylsäure mit einem Molverhältnis von 0.2:0.8:3.0

Zu einer Lösung aus Methacrylsäure (0.52 g, 6.05 mmol) und MPEG1000MA (Poly(ethyleneglykol)methylether-Methacrylat, M_{N} ca. 1100, erhältlich bei Sigma-Aldrich Schweiz) (1.72 g, 1.61 mmol) in *N,N-*Dimethylformamid (DMF) (20 mL) wurden **AcLactoseHEMA** (0.31 g, 0.40 mmol), Azoisobutyronitril (AiBN) (0.033 g, 0.2 mmol) und Phenothiazin (0.016 g, 0.08 mmol) zugegeben. Die farblose Lösung wurde 5 min im Ultraschallbad unter N₂ entgast und dann 16 h bei 80°C gerührt. Nach Zugabe von AiBN (0.033 g, 0.2 mmol) wurden weitere 5 h bei 80°C gerührt, dann abgekühlt und die Lösung am Rotationsverdampfer (RV) eingeengt. Oranges Öl. Ausbeute >90%. Das so erhaltene Polymer wird als **P28** bezeichnet und hat ein mittleres Molekulargewicht M_{w} von 58.5 kDa.

### 1.16 Herstellung des Polymers P29 aus AcLactoseMA, MPEG1000MA und Methacrylsäure mit einem Molverhältnis von 0.2:0.8:3.0

Das Copolymer wurde analog Herstellungsbeispiel 1.15 zur Herstellung des Polymers **P28** hergestellt, wobei anstelle von **AcLactoseHEMA AcLactoseMA** verwendet wurde. Das so erhaltene Polymer wird als **P29** bezeichnet und hat ein mittleres Molekulargewicht M_{w} von 40.4 kDa.

### 1.17 Herstellung der Polymere P30 und P31 aus AcLactoseHEMA beziehungsweise AcLactoseMA mit MPEG1000MA und Methacrylsäure mit einem Molverhältnis von 0.2:0.8:3 und anschiessende Deacetylierung

Die Copolymerisationen erfolgten analog 1.15 zur Herstellung des Polymers **P28**, wobei anschlissend deacetyliert wurde. Die anschliessende Deacetylierung wurde analog jener in Herstellungsbeispiel 1.13 zur Herstellung des Polymers **P24** durchgeführt. Das Polymer aus **AcLactoseHEMA** wird als Polymer **P30** bezeichnet und hat ein mittleres Molekuargewicht M_{w} von ungefähr 46.1 kDa. Das Polymer aus **AcLactoseMA** wird als Polymer **P31** bezeichnet und hat ein mittleres Molekulargewicht M_{w} von 44.5 kDa.

**Tabelle 1:**

| **Polymer** | **MAS** | **AS** | **MPEG1000MA** | **HEMA** | **Zuckermonomer** | **M_{w}** | **Polyd.** |
|---|---|---|---|---|---|---|---|
| **V1** | 2.8 | - | 1 | - | - | | |
| **V2** | 3 | - | 1 | - | - | | |
| **P1** | 3 | - | - | - | 1 D15MA | | |
| **P2** | 3 | - | - | - | 1 D10MA | | |
| **P3** | 2.8 | - | 1 | - | 0.25 D10MA | | |
| **P4** | 3 | - | 0.95 | - | 0.05 D10MA | 48.3 | 2.94 |
| **P5** | 3 | - | 0.9 | - | 0.1 D10MA | 51.3 | 2.33 |
| **P6** | 3 | - | 0.8 | - | 0.2 D10MA | 52.0 | 2.90 |
| **P7** | 3 | - | 0.7 | - | 0.3 D10MA | 44.9 | 21.5 |
| **P8** | 3 | - | 0.5 | - | 0.5 D10MA | 41.0 | 4.01 |
| **P9** | 3 | - | 0 | - | 1 D10MA | 21.3 | 2.38 |
| **P10** | 1 | - | 0.8 | - | 0.2 D10MA | 63.4 | 3.00 |
| **P11** | 2 | - | 0.8 | - | 0.2 D10MA | 48.0 | 2.87 |
| **P12** | 5 | - | 0.8 | - | 0.2 D10MA | 50.4 | 2.67 |
| **P13** | 10 | - | 0.8 | - | 0.2 D10MA | 46.4 | 2.41 |
| **P14** | 3 | - | 0.9 | - | 0.1 D5MA | 39.2 | 3.40 |
| **P15** | 3 | - | 0.8 | - 0.2 | D5MA | 51.7 | 3.49 |
| **P16** | 3 | - | - | - | 1 D5MA | 17.7 | 3.71 |
| **P17** | 3 | - | - | 0.9 | 0.1 D10MA | 22.5 | 2.91 |
| **P18** | 3 | - | - | 0.8 | 0.2 D10MA | 24.8 | 3.24 |
| **P19** | 3 | - | - | 0.5 | 0.5 D10MA | 23.5 | 3.56 |
| **P20** | - | 3 | 0.8 | - | 0.2 D10MA | | |
| **P21** | - | 3 | 0.5 | - | 0.5 D10MA | | |
| **P22** | - | 1 | 0.8 | - | 0.2 D10MA | | |
| **P23** | - | 5 0.8 | - | 0.2 | D10MA | | |
| **P24** | 2 | - | - | - | 1 AcLactoseMA | | |
| **P25** | 2 | - | - | - | 1 AcMaltoseMA | | |
| **P26** | 2 | - | - | - | 1 AcLactoseHEMA | | |
| **P27** | 2 | - | - | - | 1 AcMaltoseHEMA | | |
| **P28** | 3 | - | 0.8 | - | 0.2 AcLactoseHEMA | | |
| **P29** | 3 | - | 0.8 | - | 0.2 AcLactoseMA | | |
| **P30** | 3 | - | 0.8 | - | 0.2 AcLactoseHEMA | | |
| **P31** | 3 | - | 0.8 | - | 0.2 AcLactoseMA | | |

Tabelle 1: Verwendete Monomere zur Herstellung der erfindungsgemässen Polymere P1 bis P31 und der Vergleichspolymere V1 und V2. Die Menge der Monomere wird in Molverhältnissen angegeben. Abkürzungen: Acrylsäure (AS), Methacrylsäure (MAS), Poly(ethylenglykol)methylether-Methacrylat mit Molgewicht von ca. 1000 g/mol (MPEG1000MA, z.B. Bisomer S10W), Hydroxyethyl-Methacrylat (HEMA), M_{w} bedeutet Molekulargewicht in Kilodalton (kDa), Polyd. steht für Polydispersität, die Bedeutung der Zuckermonomere D5MA, D10MA, D15MA, AcLactoseMA, AcLactoseHEMA, AcMaltoseMA und AcMaltoseHEMA ist in den jeweiligen Beispielen erklärt.

### 2. Zementtests

Für alle Messungen im Zement wurde eine Mischung aus drei Schweizer CEM I 42.5 Zementen (aus den Werken Siggenthal, Vigier, Wildegg im Verhältnis 1:1:1) verwendet.

### 2.1 Versuche mit Polymer P1 mit Dextrin15-Seitenketten

Das Wasser, in dem das Polymer **P1** gelöst wurde, wurde auf einmal dem Zement zugegeben und 2 Minuten intensiv von Hand gemischt. Anschliessend wurde ein Zylinder (Durchmesser 30 mm, Höhe 50 mm), der auf einer Glasplatte stand, mit der Zementpaste gefüllt und sofort hochgehoben. Der Durchmesser des sich bildenden Zementkuchens wurde gemessen, sobald kein Fliessen mehr beobachtet wurde. Der Durchmesser in mm wurde als Fliessmass bezeichnet. W/Z=0.35 (100 g Zement und 35 g Wasser incl. Polymer)

**Tabelle 2: Fliessmass in mm; als Gew.-% ist der Anteil festes Polymer bezogen auf den Zement angegeben.**

| **Polymer** | Dosierung (Gew.-%) | Fliessmass (mm) |
|---|---|---|
| - | 0 | 64 |
| **P1** | 0.2 | 105 |

Aus Tabelle 2 ist ersichtlich, dass die erfindungsgemässen Polymere das Fliessmass einer Zementpaste erhöhen verglichen mit einer Zementpaste ohne Polymer.

### 2.2 Versuche mit Polymeren mit Disaccharid-Seitenketten

Die Versuche wurden gleich ausgeführt wie bei Beispiel 2.1 nur dass nicht von Hand gerührt wurde, sondern ein Propellermischer mit 2000 U/min verwendet wurde.
W/Z=0.35 (100 g Zement und 35 g Wasser incl. Polymer)

**Tabelle 3: Fliessmass in mm; als Gew.-% ist der Anteil festes Polymer bezogen auf den Zement angegeben. Aus Tabelle 3 ist ersichtlich, dass die erfindungsgemässen Polymere das Fliessmass einer Zementpaste erhöhen verglichen mit einer Zementpaste ohne Polymer.**

| **Polymer** | Dosierung (Gew.-%) | Fliessmass |
|---|---|---|
| - | 0 | 82 |
| **P26** | 0.2 | 83 |
| **P26** | 0.4 | 135 |
| **P25** | 0.2 | 112 |
| **P25** | 0.4 | 155 |
| **P27** | 0.2 | 107 |
| **P27** | 0.4 | 160 |

### 2.3 Versuche mit Polymer P2 mit Dextrin10-Seitenketten

Die Versuche wurden gleich ausgeführt wie bei Beispiel 2.2. Es wurden 250 g Zement für jede Messung verwendet. Ein Messzylinder von 50 mm Durchmesser und 51 mm Höhe wurde verwendet. Die Messung wurde 15 Minuten nach Zugabe des Wassers (mit oder ohne Polymer) wiederholt wobei der Zementleim nach diesen 15 Minuten nochmals kurz aufgemischt wurde. W/Z=0.35 (250 g Zement und 87.5 g Wasser incl. Polymer)

**Tabelle 4: Fliessmass in mm; als Gew.-% ist der Anteil festes Polymer bezogen auf den Zement angegeben; min = Minuten.**

| **Polymer** | Dosierung (Gew.-%) | Fliessmass (mm) | |
|---|---|---|---|
| | | sofort | nach 15 min |
| - | 0 | 114 | 105 |
| **P2** | 0.2 | 132 | 112 |
| **P2** | 0.4 | 138 | 130 |

Aus Tabelle 4 ist ersichtlich, dass das erfindungsgemässe Polymer **P2** das Fliessmass einer Zementpaste erhöht verglichen mit einer Zementpaste ohne Polymer.

### 2.4 Versuche mit Copolymeren von Methacrylsäure und MPEG1000Methacrylat mit (P3) und ohne (V1) Dextrin-10 Seitenketten

Die Durchführung der Tests erfolgte gleich wie in Beispiel 2.3 beschrieben. In dieser Serie wurden Copolymere von Methacrylsäure und MPEG-1000 Methacrylat und dem Zuckermonomer **D10MA** (**P3**) mit dem Vergleichspolymer ohne Zuckermonomer (**V1**) verglichen.
Das Fliessmass wurde sofort nach Zugabe des Wassers (mit oder ohne Polymer) sowie 30 Minuten (30') nach des Wassers (mit oder ohne Polymer) gemessen.
Die Abbindezeit (in Stunden) wurde mittels Temperaturkurve ermittelt. Der Zeitpunkt des Temperaturmaximums (Tmax) wurde ermittelt und die Zeit von der Zugabe des Wassers (mit oder ohne Polymer) bis zum Erreichen des Temperaturmaximums als Abbindezeit gelistet.
W/Z=0.35 (250 g Zement und 87.5 g Wasser incl. Polymer)

**Tabelle 5: Fliessmass in mm und die Abbindezeit in Stunden (Std); als Gew.-% ist der Anteil festes Polymer bezogen auf den Zement angegeben.**

| **Polymer** | Dosierung (Gew.-%) | Fliessmass (mm) | | Abbindezeit (Std) |
|---|---|---|---|---|
| | | sofort | 30' | Tmax |
| **-** | 0 | 116 | 103 | 8.2 |
| **V1** | 0.2 | 156 | 160 | 11.5 |
| **V1** | 0.4 | 206 | 218 | 14 |
| **P3** | 0.2 | 172 | 168 | 12.5 |
| **P3** | 0.4 | 204 | 226 | 16.2 |

Aus Tabelle 5 ist ersichtlich, dass der Einbau von Oligosaccharid-Seitenketten in ein Copolymer aus Methacrylsäure und MPEG1000MA (P3) verglichen mit dem Vergleichsbeispiel (V1) ohne Saccharid-Seitenketten das Fliessmass erhöhen und somit das Fliessverhalten verbessern kann und überraschend die Abbindezeit der Zementpaste nur leicht verlängert.

### 2.5 Versuche mit Copolymeren von Methacrylsäure und MPEG1000MA mit unterschiedlichen Gehalten von Dextrin-10 Seitenketten

Die Durchführung der Tests erfolgte gleich wie in Beispiel 2.3 beschrieben. W/Z=0.31 (250 g Zement und 77.5 g Wasser incl. Polymer)

Alle Polymere hatten ein Verhältnis von Methacrylsäure zur Summe der Comonomeren von 3:1. Für diese Serie wurden alle Polymere mittels Ultrafiltration (Membran Ausschlussgrenze 10 kD) gereinigt.
Das Fliessmass wurde sofort nach Zugabe des Wassers (mit oder ohne Polymer) sowie 30 Minuten (30') und 60 Minuten (60') nach Polymerzugabe gemessen.

**Tabelle 6: Fliessmass in mm und die Abbindezeit in Stunden (Std); als Gew.-% ist der Anteil festes Polymer bezogen auf den Zement angegeben.**

| **Polymer** | Dosierung (Gew.-%) | Fliessmass (mm) | | | Abbindezeit (Std) |
|---|---|---|---|---|---|
| | | sofort | 30' | 60' | Tmax |
| **-** | 0 | 65 | 63 | 60 | 7.7 |
| **V2** | 0.2 | 170 | 178 | 186 | 12.7 |
| **P4** | 0.2 | 166 | 173 | 188 | 12.7 |
| **P5** | 0.2 | 192 | 190 | 194 | 13 |
| **P6** | 0.2 | 183 | 182 | 194 | 13.2 |
| **V2** | 0.4 | 245 | 254 | 260 | 18 |
| **P6** | 0.4 | 246 | 246 | 254 | 16.7 |
| **P8** | 0.4 | 252 | 250 | 256 | 20.5 |

Aus Tabelle 6 ist ersichtlich, dass der Einbau von einem Dextrin-10-Monomer (**D10MA**) in Copolymere aus Methacrylsäure und Methylplolyaklylenglycol-Methacrylat die Abbindezeit auch bei höheren Dosierungen nicht verlängert und das Fliessen der Mischung verbessert, verglichen mit den Vergleichsbeispielen mit dem Polymer **V2** ohne Saccharid-Seitenketten.

### 2.6 Versuche mit Copolymeren von Methacrylsäure und MPEG1000Methacrylat mit unterschiedlichen Gehalten von Dextrin-5 und Dextrin-10 Seitenketten

Die Durchführung der Tests erfolgte gleich wie in Beispiel 2.3 beschrieben. W/Z=0.31 (250 g Zement und 77.5 g Wasser incl. Polymer).

Bei den ersten 3 erfindungsgemässen Polymeren (**P11, P12, P13**) wurde die Menge an Methacrylsäure variiert, bei Polymer **P8** die Menge an Zuckermonomer und bei den letzten 2 Polymeren (**P14, P15**) wurde statt **D10MA D5MA** eingesetzt. Für diese Serie wurden alle Polymere mittels Ultrafiltration (UF) (Membran Ausschlussgrenze 10 kD) gereinigt.

**Tabelle 7: Fliessmass in mm und die Abbindezeit in Stunden (Std); als Gew.-% ist der Anteil festes Polymer bezogen auf den Zement angegeben. UF bedeutet, dass die Polymere mittels Ultrafiltration gereinigt wurden.**

| **Polymer** | Dosierung (Gew.-%) | Fliessmass (mm) | | | Abbindezeit (Std) |
|---|---|---|---|---|---|
| | | sofort | 30' | 60' | Tmax |
| **V2 (UF)** | 0.2 | 180 | 185 | 195 | 12.8 |
| **P13 (UF)** | 0.2 | 242 | 198 | 186 | 12.8 |
| **P11 (UF)** | 0.2 | 123 | 116 | 118 | 11.2 |
| **P12 (UF)** | 0.2 | 270 | 238 | 240 | 13.3 |
| **P8 (UF)** | 0.2 | 194 | 168 | 168 | 13.3 |
| **P14 (UF)** | 0.2 | 190 | 194 | 205 | 12.7 |
| **P15 (UF)** | 0.2 | 223 | 220 | 224 | 13 |

Aus Tabelle 7 ist ersichtlich, dass der Einbau von Oligosaccharid Seitenketten zu einer Verbesserung des Fliessens führt, ohne die Abbindezeit zu erhöhen. Speziell erstaunlich ist, dass auch das Polymer **P13** mit einem sehr hohen Gehalt an Methacrylsäure nicht stärker verzögert als das Vergleichspolymer **V2.**

### 2.7 Versuche mit Copolymeren von D10MA bzw. D5MA mit Methacrylsäure und von Copolymeren von D10MA bzw. D5MA mit HEMA und Methacrylsäure

Die Durchführung der Tests erfolgte gleich wie in Beispiel 2.3 beschrieben. W/Z=0.35 (250 g Zement und 87.5 g Wasser incl. Polymer).
Für diese Serie wurden alle Polymere mittels Ultrafiltration (UF) (Membran Ausschlussgrenze 10 kD) gereinigt.

**Tabelle 8: Fliessmass in mm und die Abbindezeit in Stunden (Std); als Gew.-% ist der Anteil festes Polymer bezogen auf den Zement angegeben. UF bedeutet, dass die Polymere mittels Ultrafiltration gereinigt wurden.**

| **Polymer** | Dosierung (Gew.-%) | Fliessmass (mm) | | | Abbindezeit (Std) |
|---|---|---|---|---|---|
| | | sofort | 30' | 60' | Tmax |
| **-** | 0 | 117 | 100 | 95 | 8.7 |
| **P16 (UF)** | 0.2 | 153 | 130 | 136 | 21.8 |
| **P9 (UF)** | 0.2 | 138 | 124 | 125 | 16.5 |
| **P17 (UF)** | 0.2 | 166 | 142 | 134 | 14.8 |
| **P18 (UF)** | 0.2 | 146 | 116 | 110 | 12.8 |
| **P19 (UF)** | 0.2 | 125 | 108 | 108 | 12.7 |

Aus Tabelle 8 ist ersichtlich, dass Polymere, welche sowohl mit als auch ohne das zusätzliche Monomer HEMA hergestellt wurden, das Fliessmass erhöhen verglichen mit Resultaten ohne erfindungsgemässes Polymer.

### 3. Gipstests

### 3.1 Messung der Verflüssiqunqswirkunq in Gipspaste aus alpha-Halbhydrat

Das erfindungsgemässe Polymer wurde mit Wasser auf 43 g verdünnt und in 100 g Gips (alpha Halbhydrat) eingestreut. Nach 30 Sekunden wurde 2 Minuten mit einem mechanischen Rührer gerührt und das Fliessverhalten getestet. Dafür wurde ein Zylinder von 30 mm Durchmesser und 50 mm Höhe auf eine Glasplatte gestellt, mit der Gipsmischung gefüllt und hochgezogen. Der Durchmesser des gebildeten Gipsfladens wurde gemessen und als Fliessmass notiert. Als Referenz wurde das Fliessmass einer Gipsmischung mit 43 g Wasser ohne Polymer bestimmt.

**Tabelle 9: Fliessmass in mm; als Gew.-% ist der Anteil festes Polymer bezogen auf den Zement angegeben.**

| **Polymer** | Dosierung (Gew.-%) | Fliessmass (mm) |
|---|---|---|
| **-** | 0 | 76 |
| **P1** | 0.16 | 102 |
| **P24** | 0.1 | 97 |
| **P26** | 0.14 | 97 |
| **P25** | 0.2 | 101 |
| **P27** | 0.2 | 103 |

Aus Tabelle 9 ist ersichtlich, dass die erfindungsgemässen Polymere das Fliessmass einer Gipspaste erhöhen verglichen mit einer Gipspaste ohne Polymer.
Selbstverständlich ist die Erfindung nicht auf die gezeigten und beschriebenen Ausführungsbeispiele beschränkt.

## Patentansprüche

1. Polymer **P** umfassend
a) eine Hauptkette enthaltend Kohlenwasserstoffgruppen,
b) mindestens eine Seitenkette umfassend mindestens eine anionische Gruppe, ausgewählt aus der Gruppe bestehend aus Carbonsäure-, Sulfonsäure-, Phosphonsäure- und Phosphorsäuregruppe oder einem Salz davon, und
c) mindestens eine Seitenkette umfassend mindestens ein Di- oder Oligosaccharid, wobei das Di- oder Oligosaccharid über das anomere C-Atom via ein Verbindungsstück, welches mindestens eine Ester- oder Amidgruppe umfasst, an die Hauptkette gebunden ist; und gegebenenfalls
d) mindestens eine weitere Seitengruppe.

2. Polymer **P** gemäss Anspruch 1, **dadurch gekennzeichnet, dass** das Verbindungsstück ausgewählt ist aus der Gruppe bestehend aus -COO-, -CO-NH-R-NH-, -COO-R-O-, und -COO-R-NH-, wobei R unabhängig voneinander für einen C₁ - C₆ Alkylenrest oder einen C₁ - C₆ Hydroxyalkylenrest oder für einen Poly(oxyalkylen)rest steht.

3. Polymer **P** gemäss einem der Ansprüche 1 oder 2, **dadurch gekennzeichnet, dass** die anionische Gruppe eine Carbonsäuregruppe oder deren Salz ist oder enthält.

4. Polymer **P** gemäss einem der vorhergehenden Ansprüche, **dadurch gekennzeichnet, dass** das Di- oder Oligosaccharid Einheiten von Glucose, Galactose, Mannose oder Mischungen davon enthält.

5. Polymer **P** gemäss einem der vorhergehenden Ansprüche, **dadurch gekennzeichnet, dass** das Di- oder Oligosaccharid abgebaute Stärke, vorzugsweise Dextrin, abgebaute Cellulose, Lactose oder Maltose ist.

6. Polymer **P** gemäss einem der vorhergehenden Ansprüche, **dadurch gekennzeichnet, dass** das Polymer **P** umfasst:
a) mindestens eine anionische Säureeinheit **A** der Formel (I); 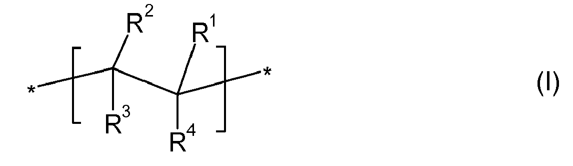
b) mindestens eine Di- oder Oligosaccharideinheit **B** der Formel (II); 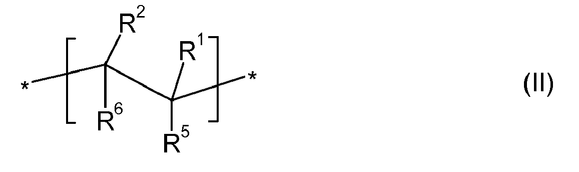 und gegebenenfalls
c) mindestens eine weitere Struktureinheit **C**;
wobei R¹ und R² je unabhängig voneinander für H, COOM, CH₂COOM oder eine Alkylgruppe mit 1 bis 5 Kohlenstoffatomen stehen,
wobei R³ unabhängig voneinander für **H,** CH₃, COOM oder CH₂COOM steht; und
wobei R⁴ unabhängig voneinander für einen Rest der Carbonsäure, Sulfonsäure, Phosphorsäure oder Phosphonsäure oder einem Salz davon steht;
oder wobei R³ mit R⁴ einen Ring bildet zu -CO-O-CO-;
wobei M für H, Alkalimetall, Erdalkalimetall, Ammonium, Alkyl-Ammonium, oder Mischungen davon steht;
wobei R⁵ unabhängig voneinander für einen Rest der Formel (III) steht
-(CH₂)ₓCO-[R⁷-R⁸]_{y}- R¹¹-(R¹²)_{z} (III)
wobei R⁷ für O oder NH steht;
wobei R⁸ für einen C₁ - C₆ Alkylenrest, einen C₁ - C₆ Hydroxyalkylenrest, einen Alkylen(polyoxyalkylen)rest oder für - R⁹-R¹⁰- steht, wobei R⁹ für einen C₁ - C₆ Alkylenrest, einen C₁ - C₆ Hydroxyalkylenrest oder für einen Alkylen(polyoxyalkylen)rest steht, wobei R¹⁰ für einen Rest eines offenkettigen via den Estersauerstoff oder NH an R⁹ gebundenen Aldonsäureesters oder -amides steht;
wobei R¹¹ für O steht;
wobei R¹² für einen Rest einer zyklischen Saccharideinheit steht und
wobei ein R¹² über das anomere C-Atom an R¹¹ gebunden ist und wobei R¹² aus gleichen oder unterschiedlichen Saccharideinheiten aufgebaut ist,
wobei x und y je unabhängig voneinander für den Wert 0 oder 1 steht;
wobei z unabhängig voneinander den Werte 1 - 100 aufweist und wobei z ≥ 2 falls y = 0 oder falls y = 1 und R⁸ ≠ -R⁹-R¹⁰-;
und wobei R⁶ unabhängig voneinander für H, CH₃, COOM oder CH₂COOM steht.

7. Polymer **P** gemäss Anspruch 6, **dadurch gekennzeichnet, dass** R¹² und gegebenenfalls R¹⁰ teilweise oder vollständig substituiert, vorzugsweise acetyliert ist.

8. Polymer **P** gemäss einem der Ansprüche 6 oder 7, **dadurch gekennzeichnet, dass** die mindestens eine anionische Säureeinheit **A** der Formel (I) teilweise oder vollständig neutralisiert ist.

9. Polymer **P** gemäss einem der Ansprüche 6 bis 8, **dadurch gekennzeichnet, dass** R¹ und R² für H oder CH₃, R³ für H oder COOM und R⁴ für COOM steht.

10. Polymer **P** gemäss einem der Ansprüche 6 bis 9, **dadurch gekennzeichnet, dass** R¹ für H oder CH₃, insbesondere für CH₃, steht und R², R³ und R⁶ für H stehen.

11. Polymer **P** gemäss einem der Ansprüche 6 bis 10, **dadurch gekennzeichnet, dass** x für 0 steht.

12. Polymer **P** gemäss einem der Ansprüche 6 bis 11, **dadurch gekennzeichnet, dass** R¹⁰ für den Rest eines offenkettigen Gluconsäureesters oder -amides steht.

13. Polymer **P** gemäss einem der Ansprüche 6 bis 12, **dadurch gekennzeichnet, dass** R¹² für eine Glucose-, Galactose- oder Mannoseeinheit, vorzugsweise für eine Glucoseeinheit, steht.

14. Polymer **P** gemäss einem der Ansprüche 6 bis 13, **dadurch gekennzeichnet, dass** z für 2 bis 50, vorzugsweise für 2 bis 15 steht.

15. Polymer **P** gemäss einem der Ansprüche 6 bis 14, **dadurch gekennzeichnet, dass** y = 1, und R⁸ für-R⁹-R¹⁰-, und R⁷ für NH steht.

16. Polymer **P** gemäss einem der Ansprüche 6 bis 15, **dadurch gekennzeichnet, dass** y = 1, und R⁸ für einen C₁ - C₆ Alkylrest, vorzugsweise für einen C₂ Alkylrest, und R⁷ für -O- steht.

17. Polymer P gemäss Anspruch 16, **dadurch gekennzeichnet, dass** R¹² teilweise oder vollständig substituiert, vorzugsweise acetyliert ist.

18. Polymer P gemäss einem der vorhergehenden Ansprüche, **dadurch gekennzeichnet, dass** die weitere Seitengruppe Carbonsäure-, Sulfonsäure-, Phosphorsäureester-, Phosphonsäure-, Carbonylamidomethylpropansulfonsäure, und deren Alkali oder Erdalkalisalze, Poly(oxyalkylen)oxycarbonyl, Poly(oxyalkylen)aminocarbonyl, Poly(oxyalkylen)oxyalkyl-, Poly(oxyalkylen)oxy-, Hydroxyethyloxycarbonyl-, Acetoxy-, Phenyl- oder N-Pyrrolidonylgruppen umfasst.

19. Polymer **P** gemäss einem der Ansprüche 1 bis 18, **dadurch gekennzeichnet, dass** die weitere Seitengruppe Poly(oxyalkylen)gruppen, vorzugsweise Poly(oxyethylen)gruppen, Poly(oxypropyle)ngruppen oder Mischungen davon, umfasst.

20. Polymer **P** gemäss einem der Ansprüche 6 bis 19, **dadurch gekennzeichnet, dass** das Polymer **P** 10 bis 99.5 Mol-%, vorzugsweise 50 bis 99 Mol-% der Säureeinheit **A** der Formel (I), 0.5 bis 90 Mol-%, vorzugsweise 1 bis 50 Mol-% der Di- oder Oligosaccharideinheit B der Formel (II), und gegebenenfalls 0 bis 89.5 Mol-%, vorzugsweise 0.1 bis 50 Mol-% der Struktureinheit **C** umfasst, jeweils bezogen auf die Gesamtmolmenge der Struktureinheiten von **A, B** und **C** im Polymer **P**.

21. Polymer **P** gemäss einem der Ansprüche 6 bis 19, **dadurch gekennzeichnet, dass** das Polymer **P** 50 bis 98 Mol-% der Säureeinheit **A** der Formel (I), 1 bis 33 Mol-% der Di- oder Oligosaccharideinheit **B** der Formel (II), und gegebenenfalls 0 bis 26 Mol-% der Struktureinheit **C** umfasst, jeweils bezogen auf die Gesamtmolmenge der Struktureinheiten von **A**, **B** und **C** im Polymer **P**.

22. Polymer **P** gemäss einem der vorhergehenden Ansprüche, **dadurch gekennzeichnet, dass** das Polymer **P** ein Molekulargewicht im Bereich von 1'000 - 150'000 g/mol, vorzugsweise 10'000 - 100'000 g/mol, besonders bevorzugt 15'000-80'000 g/mol, aufweist.

23. Polymer P gemäss einem der vorhergehenden Ansprüche, **dadurch gekennzeichnet, dass** das Polymer **P** durch radikalische Copolymerisationsreaktion in Gegenwart von mindestens einem Radikalbildner und gegebenenfalls mindestens einem Molekulargewichtsregler in einem Lösungsmittel, bevorzugt Wasser, erhältlich ist.

24. Verfahren zum Herstellen eines Polymers **P** nach einem der Ansprüche 1 bis 23, **dadurch gekennzeichnet, dass** das Polymer **P** durch Polymerisationsreaktion in Gegenwart von mindestens einem Radikalbildner von
a) mindestens einem ethylenisch ungesättigten Monomer **M**, welches ausgewählt ist aus der Gruppe bestehend aus ungesättigten Mono- oder Dicarbonsäuren, ungesättigten Sulfonsäuren, ungesättigten Phosphorsäuren, ungesättigten Phosphonsäuren oder deren Salze.; mit
b) mindestens einem ethylenisch ungesättigten Zuckermonomers **K** der Formel (VIII); 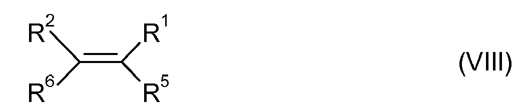 und gegebenenfalls
c) mindestens einer weiteren ethylenisch ungesättigten Verbindung **L**,
hergestellt wird, wobei die Reste R¹, R², R⁵, und R⁶ unabhängig voneinander je dieselben Bedeutungen aufweisen wie in Formel (II) definiert.

25. Verwendung eines Polymers **P** nach einem der Ansprüche 1 bis 23, als Dispergiermittel für wässrige Dispersionen.

26. Verwendung eines Polymers **P** nach einem der Ansprüche 1 bis 23 als Verflüssiger für hydraulisch abbindende Zusammensetzungen, insbesondere Beton, Mörtel oder Gips.

27. Zusatzmittel in flüssiger oder fester Form umfassend mindestens ein Polymer **P** gemäss einem der Ansprüche 1 bis 23.

28. Bindemittel enthaltendes Gemisch umfassend mindestens ein mineralisches oder hydraulisches Bindemittel und mindestens ein Polymer **P** nach einem der Ansprüche 1 bis 23 in einer Menge von 0.01 bis 10 Gew.-% bezogen auf das Gewicht des Bindemittels.

29. Bindemittel enthaltendes Gemisch gemäss Anspruch 29, **dadurch gekennzeichnet, dass** das mindestens eine Bindemittel ausgewählt ist aus der Gruppe bestehend aus Zement, einem latent hydraulischen Pulver, einem oder mehreren inerten mikroskopischen Pulvern, Gips, oder Mischungen davon.

30. Verfahren zur Herstellung eines Bindemittel enthaltenden Gemisches gemäss einem der Ansprüche 29 oder 30, **dadurch gekennzeichnet, dass** das Polymer **P** getrennt oder als Zusatzmittel vorgemischt in fester oder flüssiger Form dem Bindemittel zugegeben wird.
